# EUROPEAN PATENT APPLICATION

(11) **EP 2 371 910 A1**
(43) Date of publication of application: **05.10.2011**
(21) Application number: 11159206.9
(22) Date of filing: 22.03.2011
(51) Int. Cl.: C09D 11/00, C09D 11/10

(54) **Ink composition, inkjet recording method and process for producing molded printed material**

(30) Priority: 30.03.2010 JP 2010077269; 01.03.2011 JP 2011042053
(71) Applicant: Fujifilm Corporation, Minato-ku Tokyo (JP)
(72) Inventor: Mochizuki, Kyohei, Ashigarakami-gun Kanagawa (JP)
(74) Representative: Mayall, John

(57) **Abstract**

An ink composition is provided that includes (Component a) an open-chain and/or cyclic ether bond-containing monofunctional (meth)acrylate, (Component b) one or more monofunctional ethylenically unsaturated compounds selected from the group consisting of a polycyclic aliphatic group-containing monofunctional (meth)acrylate and N-vinyl-2-caprolactam, (Component c) a polymerization initiator, (Component e) a polyfunctional (meth)acrylate at no greater than 10 wt % relative to the ink composition, and (Component f) a fluorine-substituted hydrocarbon group- or siloxane structure-containing polymer, the ratio by weight of (Component a)/(Component b) being 0.7 to 1.9. There are also provided an inkjet recording method that includes (a¹) an image formation step of forming an image above a recording medium by discharging the ink composition by an inkjet method and (b¹) a curing step of curing the ink composition by irradiating the obtained image with actinic radiation to thus obtain a cured image above the recording medium, and a process for producing a molded printed material that includes (a²) an image formation step of forming an image above a recording medium by discharging the ink composition by an inkjet method, (b²) a curing step of curing the ink composition by irradiating the obtained image with actinic radiation to thus obtain a printed material having a cured image above the recording medium, and (c²) a molding step of molding the printed material.

## Description

The present invention relates to an ink composition, an inkjet recording method, and a process for producing a formed printed material.

As image recording methods for forming an image on a recording medium such as paper based on an image data signal, there are an electrophotographic system, sublimation type and melt type thermal transfer systems, an inkjet system, etc. In the electrophotographic system, a process of forming an electrostatic latent image on a photosensitive drum by electrically charging and exposing is required, and the system is complicated; as a result, there is the problem that the production cost is high. With regard to the thermal transfer system, although the equipment is inexpensive, due to the use of an ink ribbon there is the problem that the running cost is high and waste material is generated.

On the other hand, with regard to the inkjet system, the equipment is inexpensive, and image is formed directly on a recording medium by discharging an ink composition only on a required image area, the ink composition can be used efficiently and the running cost is low. Furthermore, there is little noise and it is excellent as an image recording system.

Among them, an inkjet recording ink composition (radiation-curing inkjet recording ink composition), which is curable upon exposure to radiation such as UV rays, is an excellent system from the viewpoint of it being possible to print on various types of recording media because, compared with a solvent-based ink composition, the drying properties are excellent and an image is resistant to spreading since the majority of the components in the ink composition cure upon exposure to radiation such as UV rays.

JP-A-2006-342222 (JP-A denotes a Japanese unexamined patent application publication) discloses, as a photocurable resin composition suitable for adhesion of processed glass products, a photocurable resin composition comprising as essential components (A) a polybutadiene compound that does not have in the molecule a radically polymerizable group other than a butadiene unit-derived ethylenic double bond, (B) a monofunctional (meth)acrylate containing an open-chain aliphatic group or an alicyclic group having 6 or more carbon atoms, (C) at least one type selected from the group consisting of a monofunctional (meth)acrylate containing a hydroxy group- and/or cyclic ether bond-containing alicyclic group or open-chain aliphatic group and a monofunctional acrylamide compound, and (D) a photopolymerization initiator.

It is an object of the present invention to provide an ink composition having excellent ink stability over time, low irritation toward the skin, and excellent ink curability, ink discharge stability, and adhesion of an obtained image to a recording medium, and to provide an inkjet recording method employing the ink composition.

Furthermore, it is another object of the present invention to provide an ink composition that gives an image having good adhesion to a plastic substrate such as polycarbonate, polyvinyl chloride, polyethylene terephthalate, or polyethylene naphthalate and that has excellent molding suitability, and to provide a process for producing a molded printed material employing the ink composition.

The above-mentioned object has been attained by means described in (1), (14), and (15) below. They are described below together with (2) to (13), which are preferred embodiments.
(1) An ink composition comprising (Component a) an open-chain and/or cyclic ether bond-containing monofunctional (meth)acrylate (Component b) one or more monofunctional ethylenically unsaturated compounds selected from the group consisting of a polycyclic aliphatic group-containing monofunctional (meth)acrylate and N-vinyl-2-caprolactam,(Component c) a polymerization initiator (Component e) a polyfunctional (meth)acrylate at no greater than 10 wt % relative to the ink composition; and (Component f) a fluorine-substituted hydrocarbon group- or siloxane structure-containing polymer,the ratio by weight of (Component a)/(Component b) being 0.7 to 1.9.
(2) The ink composition according to (1), wherein Component a above is selected from the group consisting of ethoxyethoxyethyl acrylate, tetrahydrofurfuryl acrylate, 2-methoxyethyl acrylate, 3-methoxybutyl acrylate, butoxyethyl acrylate, and an ethylene oxide-modified cresol acrylate.
(3) The ink composition according to (1) or (2), wherein Component b above is one or more monofunctional ethylenically unsaturated compounds selected from the group consisting of dicyclopentenyloxyethyl (meth)acrylate, dicyclopentenyl (meth)acrylate, dicyclopentanyl (meth)acrylate, isobornyl (meth)acrylate, and N-vinyl-2-caprolactam.
(4) The ink composition according to any one of (1) to (3), wherein it further comprises (Component d) a colorant.
(5) The ink composition according to any one of (1) to (4), wherein Component f above comprises an ethylenically unsaturated group.
(6) The ink composition according to (5), wherein the ethylenically unsaturated group of Component f above is a (meth)acryloyloxy group and/or a (meth)acrylamide group.
(7) The ink composition according to any one of (1) to (6), wherein the ratio by weight of (Component a)/(Component b) is 0.73 to 1.81.
(8) The ink composition according to any one of (1) to (7), wherein Component a is contained at 15 to 55 wt % relative to the ink composition, and Component b is contained at 15 to 50 wt % relative to the ink composition.
(9) The ink composition according to any one of (1) to (8), wherein Component e is contained at 0.1 to 6 wt % relative to the ink composition.
(10) The ink composition according to any one of (1) to (9), wherein Component e is contained at 1 to 5 wt % relative to the ink composition.
(11) The ink composition according to any one of (1) to (10), wherein Component f is contained at 0.1 to 3 wt % relative to the ink composition.
(12) The ink composition according to any one of (1) to (11), wherein Component a is 2-(2-ethoxyethoxy)ethyl acrylate, Component b is dicyclopentenyl acrylate, Component e is trimethylolpropane triacrylate, and Component f is a polyether-modified polydimethylsiloxane.
(13) The ink composition according to any one of (1) to (12), wherein Component a is 2-(2-ethoxyethoxy)ethyl acrylate, Component b is dicyclopentenyl acrylate, Component e is trimethylolpropane triacrylate, and Component f is a polyurethane containing a constitutional unit derived from a diol that contains a fluoroalkyl group or a siloxane structure and contains a (meth)acrylate residue.
(14) An inkjet recording method comprising (a¹) an image formation step of forming an image above a recording medium by discharging the ink composition according to any one of (1) to (13) by an inkjet method; and (b¹) a curing step of curing the ink composition by irradiating the obtained image with actinic radiation to thus obtain a cured image above the recording medium.
(15) A process for producing a molded printed material comprising (a²) an image formation step of forming an image above a recording medium by discharging the ink composition according to any one of (1) to (13) by an inkjet method, (b²) a curing step of curing the ink composition by irradiating the obtained image with actinic radiation to thus obtain a printed material having a cured image above the recording medium, and (c²) a molding step of molding the printed material.

In accordance with the present invention, there can be provided an ink composition having excellent ink stability over time, low irritation toward the skin, and excellent ink curability, ink discharge stability, and adhesion of an obtained image to a recording medium, and an inkjet recording method employing the ink composition.

Furthermore, in accordance with the present invention, there can be provided an ink composition that gives an image having good adhesion to a plastic substrate such as polycarbonate, polyvinyl chloride, polyethylene terephthalate, or polyethylene naphthalate and that has excellent molding suitability, and a process for producing a molded printed material employing the ink composition.
FIG. 1 shows a schematic diagram showing one example of a mold used for a molding test.
FIG. 2 shows a schematic diagram showing another example of a mold used for a molding test.

The ink composition of the present invention comprises (Component a) an open-chain and/or cyclic ether bond-containing monofunctional (meth)acrylate, (Component b) one or more monofunctional ethylenically unsaturated compounds selected from the group consisting of a polycyclic aliphatic group-containing monofunctional (meth)acrylate and N-vinyl-2-caprolactam, (Component c) a polymerization initiator, (Component e) a polyfunctional (meth)acrylate at no greater than 10 wt % relative to the ink composition, and (Component f) a fluorine-substituted hydrocarbon group- or siloxane structure-containing polymer, the ratio by weight of (Component a)/(Component b) being 0.7 to 1.9.

The ink composition is explained in detail below.

The ink composition of the present invention includes an embodiment in which it comprises a monofunctional monomer as an essential component, and only comprises a polyfunctional monomer as an optional component at an upper limit value or less or does not comprise a polyfunctional monomer.

'Monomer' means a compound having at least one addition-polymerizable ethylenically unsaturated group.

'Monofunctional' means having in the molecule only one ethylenically unsaturated group that contributes to addition polymerization, and 'polyfunctional' means having in the molecule two or more ethylenically unsaturated groups that contribute to addition polymerization.

The ink composition of the present invention comprises as monofunctional monomers (Component a) an open-chain and/or cyclic ether bond-containing monofunctional (meth)acrylate and (Component b) one or more monofunctional ethylenically unsaturated compounds selected from the group consisting of a polycyclic aliphatic group-containing monofunctional (meth)acrylate and N-vinyl-2-caprolactam.

Component a and Component b are explained below.

### (Component a) Open-chain and/or cyclic ether bond-containing monofunctional (meth)acrylate

In the present invention, '(meth)acrylate' means 'acrylate and/or methacrylate', and '(meth)acrylic' means 'acrylic and/or methacrylic'. '(Meth)acrylate' means a (meth)acrylate ester.

'Open-chain' means that an ether bond-containing group is a straight chain. 'Cyclic' means that an ether bond-containing group is cyclic, preferably a 5-membered ring or a 6-membered ring, and more preferably a 5-membered ring.

The 'open-chain and/or cyclic ether bond-containing monofunctional (meth)acrylate' is preferably a compound represented by Formula (I) below as an example of an acrylate. A methacrylate corresponding to the acrylate below is also included in the present invention. 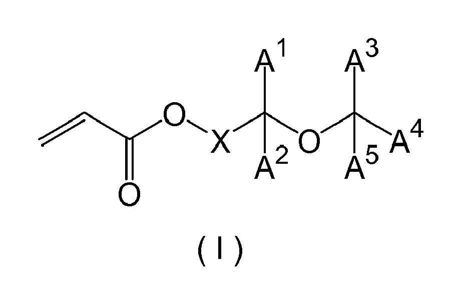 wherein A¹ to A⁵ independently denote a hydrogen atom, an alkyl group, an alkoxy group, -L¹-(OR¹)ₙ-R² or an amino group, L¹ denotes a single bond or an alkylene group, R¹ denotes an alkylene group, R² denotes a hydrogen atom or an alkoxy group, n denotes an integer of 1 or greater, at least one of A¹ to A⁵ denotes a hydrogen atom, any two of A¹ to A⁵ may be bonded to each other to form a ring, and X denotes an alkylene group, a group formed by combining two or more alkylene groups and one or more ether bonds, or a group formed by combining two or more alkylene groups and one or more ester bonds.

The acrylate monomer represented by Formula (I) preferably has a hydrogen atom on an atom at the α-position of the ether oxygen atom.

The alkyl group denoted by A¹ to A⁵ above is preferably an alkyl group having 1 to 8 carbon atoms, and more preferably an lower alkyl group having 1 to 4 carbon atoms, particularly preferably a methyl group or an ethyl group.

The alkoxy group denoted by A¹ to A⁵ above is preferably an alkoxy group having 1 to 8 carbon atoms, and more preferably an lower alkyl group having 1 to 4 carbon atoms, particularly preferably a methoxy group or an ethoxy group.

The amino group denoted by A¹ to A⁵ above is preferably one in which two hydrogen atoms of an amino group are replaced by alkyl groups, and is more preferably a dimethylamino group or a diethylamino group.

The alkylene group denoted by L¹ of -L¹-(OR¹)ₙ-R² above is preferably an alkylene group having 2 to 8 carbon atoms, and more preferably an lower alkylene group having 1 to 4 carbon atoms, particularly preferably -CH₂CH₂-, -CH(CH₃)-, -CH(CH₃)CH₂-, or -CH₂CH(CH₃)-.

Furthermore, the alkylene group denoted by R¹ of -L¹-(OR¹)ₙ-R² above is preferably an alkylene group having 2 to 8 carbon atoms, more preferably an lower alkylene group having 2 to 4 carbon atoms, and particularly preferably -CH₂CH₂-, -CH(CH₃)-, -CH(CH₃)CH₂-, or -CH₂CH(CH₃)-.

Furthermore, the alkoxy group denoted by R² of -L¹-(OR¹)ₙ-R² above is preferably an alkoxy group having 1 to 8 carbon atoms, and more preferably -O-CH₃, -OCH₂CH₃, -OCH(CH₃)₂, or -OCH₂CH(C₄H₉)CH₂CH₃.

Furthermore, n in -L¹-(OR¹)ₙ-R² above is preferably an integer of 1 to 5, and more preferably 1 or 2.

X in Formula (I) above denotes an alkylene group, a group in which two or more alkylene groups and one or more ether bonds are combined, or a group in which two or more alkylene groups and one or more ester bonds are combined. That is, X in Formula (I) above is preferably a group represented by Formula (X-1) or Formula (X-2) below. 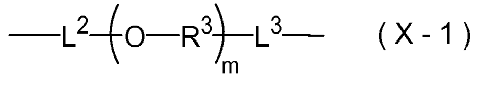 wherein L² denotes a single bond or an alkylene group, R³ denotes an alkylene group, L³ denotes a single bond, an alkylene group, or an oxyalkylene group, and m denotes an integer of 0 or greater. The alkyl group and the alkylene group are preferably a lower alkyl group having 1 to 4 carbon atoms and a lower alkylene group having 1 to 4 carbon atoms.
wherein R⁴ and R⁵ independently denote a single bond or an alkylene group, 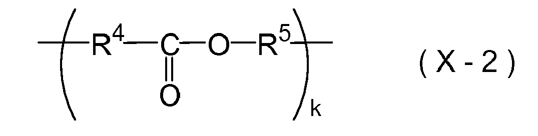 and k denotes an integer of 1 or greater.

With regard to the acrylate monomer represented by Formula (I) above, any two of A¹ to A⁵ may be bonded to each other to form a ring, and as a compound forming a ring in this way, a compound represented by Formula (III), which is explained in the following paragraphs, can be cited as an example.

The acrylate monomer represented by Formula (I) above includes a cyclic ether bond-containing acrylate represented by Formula (III). 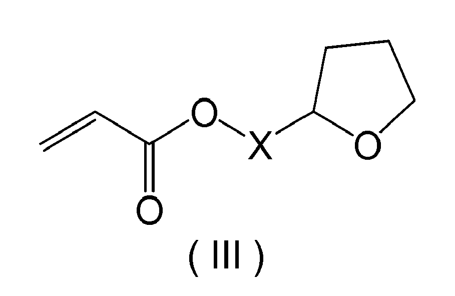 wherein X denotes an alkylene group, a group formed by combining two or more alkylene groups and one or more ether bonds, or a group formed by combining two or more alkylene groups and one or more ester bonds.

Specific examples of the compound represented by Formula (III) include tetrahydrofurfuryl acrylate (THFA) (X = -CH₂-).

With respect to the open-chain ether bond-containing acrylate and the cyclic ether bond-containing acrylate, specific examples of the acrylate monomer represented by Formula (I) above include M-1 to M-20 below. As described above, the methacrylate corresponding to each compound may also be used in the present invention.

Among the specific examples shown below, M-13, M-15, M-17, and M-19 correspond also to compounds represented by Formula (III) above.

Among the compound examples, as open-chain ether bond-containing compounds, M-5 (EOEOEA), M-7, M-16, and M-20 are preferable.

Furthermore, among the compound examples, as cyclic ether bond-containing compounds, M-13 (THFA), M-15, and M-19 are preferable.

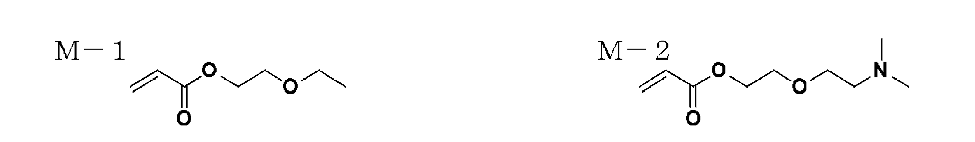

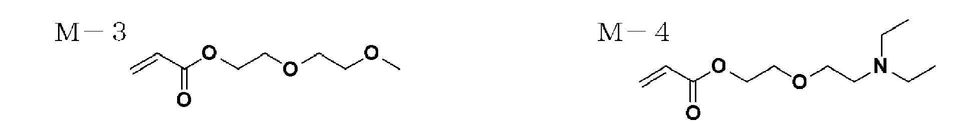

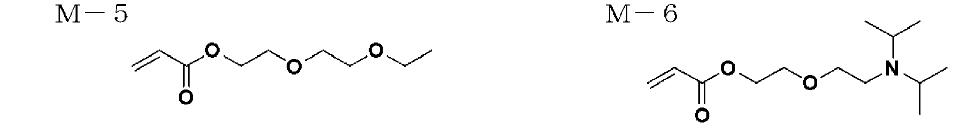

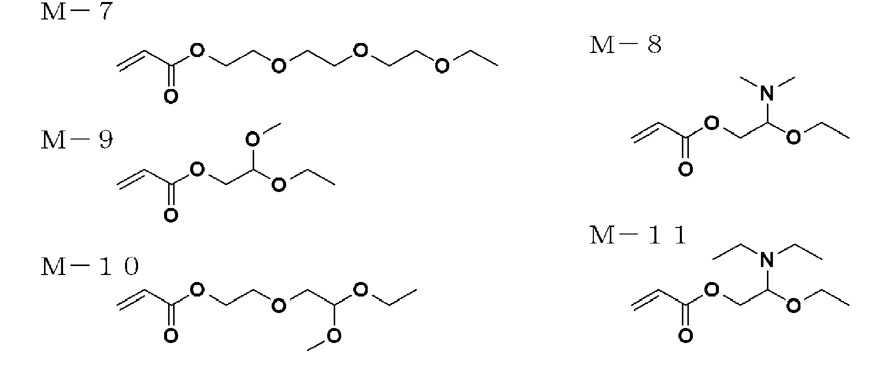

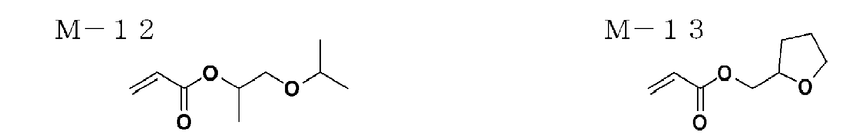

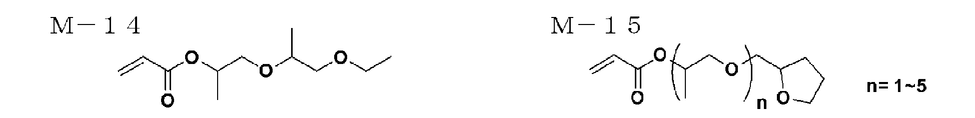

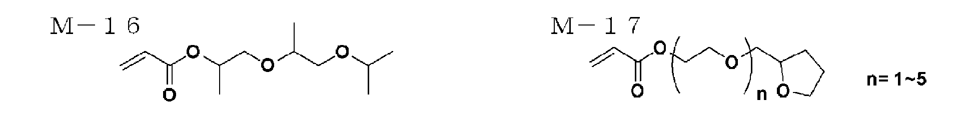

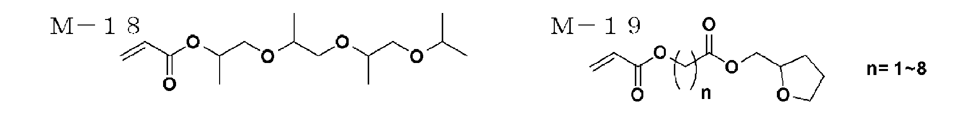

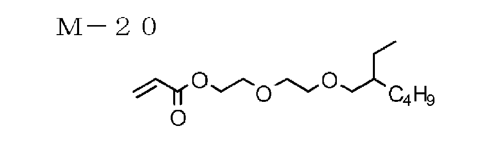

Component a is preferably selected from the group consisting of ethoxyethoxyethyl acrylate, tetrahydrofurfuryl acrylate, 2-methoxyethyl acrylate, 3-methoxybutyl acrylate, butoxyethyl acrylate, and an ethylene oxide-modified cresol acrylate.

The content of Component a in the ink composition is preferably 15 to 55 wt %, and more preferably 35 to 55 wt %.

### (Component b) One or more monofunctional ethylenically unsaturated compounds selected from the group consisting of polycyclic aliphatic group-containing monofunctional (meth)acrylate and N-vinyl-2-caprolactam

Both a polycyclic aliphatic group-containing monofunctional (meth)acrylate and N-vinyl-2-caprolactam impart common properties to an ink composition or an image formed by curing the ink composition in terms of the two being cyclic structure-containing ethylenically unsaturated compounds.

The polycyclic aliphatic group is a group that does not contain an aromatic ring but contains two or more aliphatic rings, and is preferably a polycyclic hydrocarbon group having two or more hydrocarbon rings.

Component b is preferably a (meth)acrylate for which the glass transition temperature (Tg) of a homopolymer having Component b as a constituent unit is at least 15°C, more preferably at least 50°C, and yet more preferably at least 80°C, and it is particularly preferable that the Tg of the homopolymer is no greater than 200°C. Here, the glass transition temperature (Tg) of a homopolymer means a temperature measured by a differential thermal analysis method.

In order to satisfy this requirement for Tg, Component b preferably does not have three or more ether bonds in the molecule.

Furthermore, 'constituent unit' means a unit derived from a monomer molecule used for production of a synthetic polymer by polymerization or copolymerization, or a modified unit formed by modification thereof.

The polycyclic aliphatic group-containing monofunctional (meth)acrylate is explained, and specific examples thereof are then cited with respect to acrylates.

The polycyclic aliphatic group-containing monofunctional (meth)acrylate includes a norbornane skeleton-containing compound represented by Formula (C3) below. 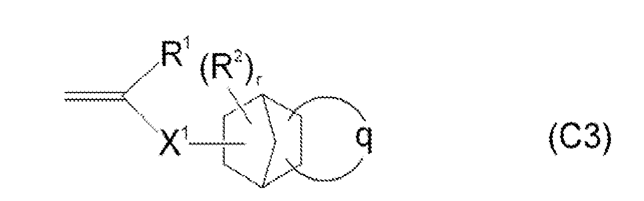 wherein R¹ denotes a hydrogen atom or a methyl group, X¹ denotes an ester group (-C(O)O-). R² denotes a substituent, r denotes an integer of 0 to 5, q denotes a cyclic hydrocarbon structure, the cyclic hydrocarbon structure may comprise a carbonyl bond (-C(O)-) and/or an ester bond (-C(O)O-) in addition to a hydrocarbon bond, the r R²s may be identical to or different from each other, and one carbon atom in the norbornane skeleton may be replaced by an ether bond (-O-) and/or an ester bond (-C(O)O-).

(H₂C=C(R¹)-COO-) containing R¹ and X¹ may be bonded to any position of the alicyclic hydrocarbon structure. The 'alicyclic hydrocarbon structure' means the norbornane structure and the cyclic hydrocarbon structure of q of Formula (C3).

From the viewpoint of improving affinity with a pigment, the end of X¹ bonded to the alicyclic hydrocarbon structure in Formula (C3) is preferably an oxygen atom, and more preferably an ethereal oxygen atom, and X¹ in Formula (C3) is yet more preferably -C(O)O(CH₂CH₂O)ₚ- (p denotes 1 or 2).

The R²s in Formula (C3) independently denote a substituent that may be bonded to any position on the alicyclic hydrocarbon structure.

The r R²s may independently be a monovalent or polyvalent substituent; the monovalent substituent is preferably a hydroxy group, a substituted or unsubstituted amino group, a thiol group, a siloxane group, or an optionally substituted hydrocarbon group or heterocyclic group having a total of no greater than 30 carbons, and a divalent substituent is preferably an oxy group (=O).

The substitution number r for R² denotes an integer of 0 to 5.

q in Formula (C3) denotes a cyclic hydrocarbon structure whose opposite termini may substitute any positions of the norbornane skeleton; it may be a monocyclic structure or a polycyclic structure, and it may contain a carbonyl bond (-C(O)-) and/or an ester bond (-C(O)O-) as well as the hydrocarbon bonds in the cyclic hydrocarbon structure.

The monomer represented by Formula (C3) above is preferably a monomer represented by Formula (C4) or Formula (C5). The unsaturated bond in the cyclic hydrocarbon structure of Formula (C5) has low radical polymerizability, and in the present invention a compound represented by Formula (C5) is treated as a monofunctional ethylene unsaturated compound.

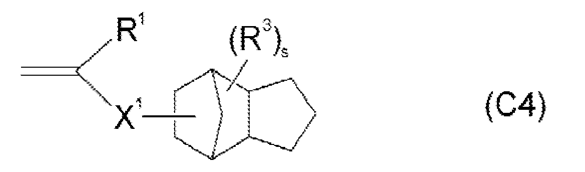

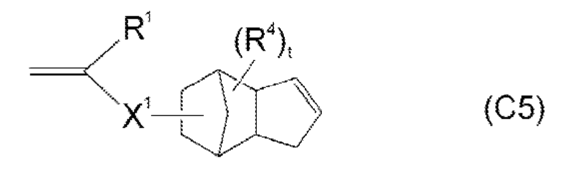

In Formula (C4) and Formula (C5), R¹ denotes a hydrogen atom and a methyl group, X¹ denotes -COO-, R³ and R⁴ independently denote a substituent, s and t independently denote an integer of 0 to 5, and the s R³s and the t R⁴s may be identical to or different from each other.

R¹ and X¹ in Formula (C4) or Formula (C5) have the same meanings as those of R¹ and X¹ in Formula (C3) and preferred ranges are also the same.

The bond -COO- containing R¹ and X¹ in Formula (C4) or Formula (C5) may be bonded to any position on the alicyclic hydrocarbon structures in Formula (C4) and Formula (C5) below.

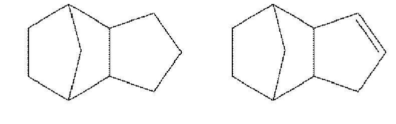

R³ and R⁴ in Formula (C4) and Formula (C5) independently denote a substituent, and it may be bonded to any position on the alicyclic hydrocarbon structures in Formula (C4) and Formula (C5). The substituent denoted by R³ or R⁴ has the same meaning as that of the substituent denoted by R² in Formula (C3), and a preferred range is also the same.

s and t in Formula (C4) or Formula (C5) independently denote an integer of 0 to 5, and the s R³s and the t R⁴s may be identical to or different from each other.

Preferred specific examples of monofunctional acrylates as the monomer represented by Formula (C3) are shown below. It is needless to say that the corresponding methacrylate may be used to ink composition of the prevent invention.

In some of the compound examples below, a hydrocarbon chain is represented by a simplified structural formula in which symbols for carbon (C) and hydrogen (H) are omitted.

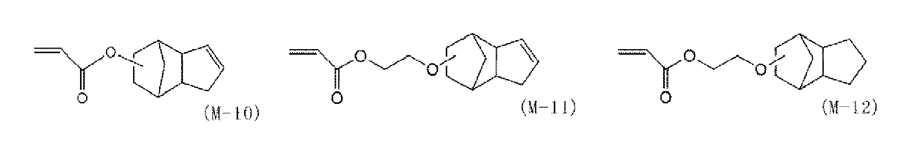

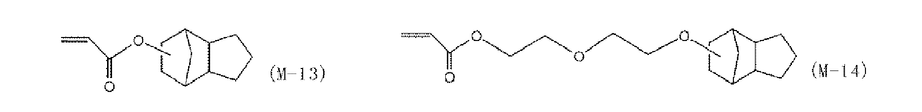

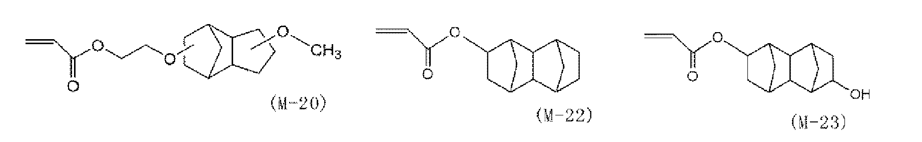

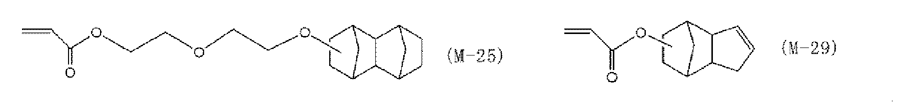

Preferred specific examples of monofunctional methacrylates as the monomer represented by Formula (C3) are shown below.

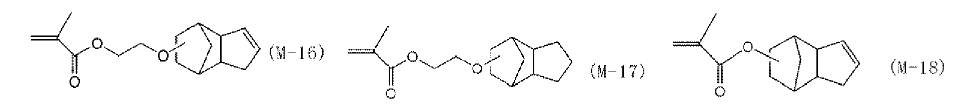

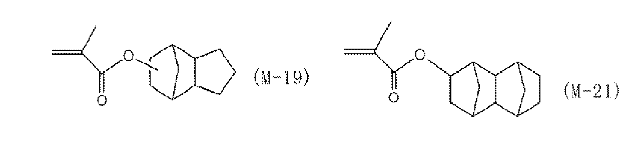

With regard to the above-mentioned compound examples, an ethylenically unsaturated bond present in the aliphatic cyclic structure does not correspond to a polymerizable ethylenically unsaturated bond.

Preferred specific examples of Component b include at least one compound selected from the group consisting of dicyclopentenyloxyethyl (meth)acrylate, dicyclopentenyl (meth)acrylate, dicyclopentanyl (meth)acrylate, and isobornyl (meth)acrylate.

In the present invention, as Component b, an N-vinyllactam is used, and preferred examples thereof include ones represented by Formula (6) below. 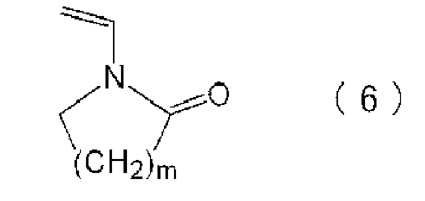 wherein m denotes an integer of 1 to 5; m is preferably an integer of 2 to 4 from the viewpoint of flexibility after the ink composition is cured, adhesion to a support, and ready availability of starting materials, m is more preferably 2 or 4, and m is particularly preferably 4, which is N-vinylcaprolactam. N-vinylcaprolactam is preferably used since it has excellent safety, is commonly used and is readily available at a relatively low price, and gives particularly good ink curability and adhesion of a cured film to a support.

The total content of Component b is preferably 15 to 50 wt % in the ink composition, and more preferably 20 to 45 wt %.

### Ratio by weight of (Component a)/(Component b)

The ratio by weight of (Component a)/(Component b) is necessarily 0.7 to 1.9, and preferably 0.73 to 1.81.

The ink composition of the present invention preferably comprises Component a at 15 to 55 wt % relative to the ink composition and Component b at 15 to 50 wt % relative to the ink composition.

It is surmised that setting the weights of Component a and Component b so as to give the above-mentioned ratio by weight enables the amount of oxygen dissolved in the ink composition to be adjusted appropriately, thus giving good ink curability and good adhesion of a cured material to a plastic substrate.

### (Component c) Polymerization initiator

The ink composition comprises (Component C) a polymerization initiator.

As a polymerization initiator that can be used in the present invention, a known radical polymerization initiator may be used. The radical polymerization initiator that can be used in the present invention may be used singly or in a combination of two or more types.

The polymerization initiator that can be used in the present invention is a compound that forms a polymerization initiating species by absorbing external energy. The external energy used for initiating polymerization can be broadly divided into heat and actinic radiation, a thermal polymerization initiator and a photopolymerization initiator are used respectively, and a photopolymerization initiator are preferably used. Examples of the actinic radiation include γ rays, β rays, an electron beam, ultraviolet rays, visible light, and infrared rays, and preferred examples include ultraviolet rays.

Examples of the radical polymerization initiator that can be used in the present invention include (a) an aromatic ketone, (b) an acylphosphine compound, (c) an aromatic onium salt compound, (d) an organic peroxide, (e) a thio compound, (f) a hexaarylbiimidazole compound, (g) a ketoxime ester compound, (h) a borate compound, (i) an azinium compound, (j) a metallocene compound, (k) an active ester compound, and (I) a compound having a carbon-halogen bond. With regard to these radical polymerization initiators, the above-mentioned compounds (a) to (I) may be used singly or in combination.

Details of the above-mentioned radical polymerization initiators (a) to (I) are known to a person skilled in the art, and are described in for example paragraphs 0090 to 0116 of JP-A-2009-185186.

In the ink composition of the present invention, the total amount of polymerization initiator (Component c) used relative to the total amount of polymerizable monomers used is preferably in the range of 0.01 to 35 wt %, more preferably 0.5 to 20 wt %, and yet more preferably 1.0 to 15 wt %. When 0.01 wt % or greater, the composition can be cured sufficiently, and when no greater than 35 wt %, a cured film having a uniform degree of curing can be obtained.

Furthermore, when a sensitizer is used in combination in the ink composition that can be used in the present invention, the radical polymerization initiator:sensitizer ratio by weight is preferably in the range of 200:1 to 1:200, more preferably 50:1 to 1:50, and yet more preferably 20:1 to 1:5.

### (Component d) Colorant

In the present invention, the ink composition may preferably contain a (Component d) colorant in order to improve the visibility of a formed image area.

The colorant is not particularly limited, but a pigment and an oil-soluble dye that have excellent weather resistance and rich color reproduction are preferable, and it may be selected from any known coloring agent such as a soluble dye. It is preferable that the colorant does not function as a polymerization inhibitor in a polymerization reaction, which is a curing reaction. This is because the sensitivity of the curing reaction by actinic radiation should not be degraded.

The pigment that can be used in the present invention is not particularly limited and, for example, organic and inorganic pigments having the numbers below described in the Color Index may be used.

That is, as a red or magenta pigment, Pigment Red 3, 5, 19, 22, 31, 38, 42, 43, 48:1, 48:2, 48:3, 48:4, 48:5, 49:1, 53:1, 57:1, 57:2, 58:4, 63:1, 81, 81:1, 81:2, 81:3, 81:4, 88, 104, 108, 112, 122, 123, 144, 146, 149, 166, 168, 169, 170, 177, 178, 179, 184, 185, 208, 216, 226, or 257, Pigment Violet 3, 19, 23, 29, 30, 37, 50, or 88, and Pigment Orange 13, 16, 20, or 36;
as a blue or cyan pigment, Pigment Blue 1, 15, 15:1, 15:2, 15:3, 15:4, 15:6, 16, 17-1, 22, 27, 28, 29, 36, or 60;
as a green pigment, Pigment Green 7, 26, 36, or 50;
as a yellow pigment, Pigment Yellow 1, 3, 12, 13, 14, 17, 34, 35, 37, 55, 74, 81, 83, 93, 94, 95, 97, 108, 109, 110, 120, 137, 138, 139, 153, 154, 155, 157, 166, 167, 168, 180, 185, or 193; as a black pigment,
Pigment Black 7, 28, or 26; as a white pigment,
Pigment White 6, 18, or 21, etc. may be used according to the intended application.

In the present invention, a disperse dye may be used in a range that enables it to be dissolved in a water-immiscible organic solvent. Disperse dyes generally include water-soluble dyes, but in the present invention it is preferable for the disperse dye to be used in a range such that it dissolves in a water-immiscible organic solvent.

Specific preferred examples of the disperse dye include CI Disperse Yellow 5, 42, 54, 64, 79, 82, 83, 93, 99, 100, 119, 122, 124, 126, 160, 184:1, 186, 198, 199, 201, 204, 224, and 237; CI Disperse Orange 13, 29, 31:1, 33, 49, 54, 55, 66, 73, 118, 119, and 163; CI Disperse Red 54, 60, 72, 73, 86, 88, 91, 92, 93, 111, 126, 127, 134, 135, 143, 145, 152, 153, 154, 159, 164, 167:1, 177, 181, 204, 206, 207, 221, 239, 240, 258, 277, 278, 283, 311, 323, 343, 348, 356, and 362; CI Disperse Violet 33; CI Disperse Blue 56, 60, 73, 87, 113, 128, 143, 148, 154, 158, 165, 165:1, 165:2, 176, 183, 185, 197, 198, 201, 214, 224, 225, 257, 266, 267, 287, 354, 358, 365, and 368; and CI Disperse Green 6:1 and 9.

It is preferable that the colorant is added to the ink composition and then dispersed in the ink to an appropriate degree. For dispersion of the colorant, for example, a dispersing machine such as a ball mill, a sand mill, an attritor, a roll mill, an agitator, a Henschel mixer, a colloidal mill, an ultrasonic homogenizer, a pearl mill, a wet type jet mill, or a paint shaker may be used.

The colorant may be added directly to the ink composition, but in order to improve dispersibility it may be added in advance to a solvent or a dispersing medium such as a polymerizable compound used in the present invention.

In the present invention, in order to avoid the problem of the solvent resistance being degraded when the solvent remains in the cured image and the VOC (Volatile Organic Compound) problem of the residual solvent, it is preferable to add the colorant in advance to a dispersing medium such as a polymerizable compound. As a polymerizable compound used, it is preferable in terms of dispersion suitability to select a monomer having the lowest viscosity. The colorants may be used by appropriately selecting one type or two or more types according to the intended purpose of the ink composition.

When a colorant such as a pigment that is present as a solid in the ink composition is used, it is preferable for the colorant, the dispersant, the dispersing medium, dispersion conditions, and filtration conditions to be set so that the average particle size of colorant particles is preferably 0.005 to 0.5 µm, more preferably 0.01 to 0.45 µm, and yet more preferably 0.015 to 0.4 µm. By such control of particle size, clogging of a head nozzle can be suppressed, and the ink storage stability, the transparency, and the curing sensitivity can be maintained.

The content of the colorant in the ink composition is appropriately selected according to the color and the intended purpose, and is preferably 0.01 to 30 wt % relative to the weight of the entire ink composition.

### (Component e) Polyfunctional (meth)acrylate

The ink composition of the present invention comprises a polyfunctional (meth)acrylate as an optional component.

When a polyfunctional (meth)acrylate is used, it is used in combination with the monofunctional (meth)acrylates of (Component a) and (Component b). Adding a polyfunctional (meth)acrylate to the ink composition improves the strength of a cured film but degrades the film molding suitability. Because of this, the amount of polyfunctional (meth)acrylate (Component e) added is no greater than 10 wt % relative to the ink composition, preferably 0.1 to no greater than 10 wt %, and more preferably 1 to 5 wt %, and the proportion thereof is preferably no greater than 20 wt % relative to the total of (Component a) and (Component b).

Specific examples of the polyfunctional (meth)acrylate (Component e) include bis(4-acryloxypolyethoxyphenyl)propane, neopentyl glycol di(meth)acrylate, 1,6-hexanediol di(meth)acrylate, 1,9-nonanediol di(meth)acrylate, ethylene glycol di(meth)acrylate, diethylene glycol di(meth)acrylate, triethylene glycol di(meth)acrylate, tetraethylene glycol di(meth)acrylate, polyethylene glycol di(meth)acrylate, dipropylene glycol di(meth)acrylate, tripropylene glycol di(meth)acrylate, tetrapropylene glycol di(meth)acrylate, polypropylene glycol di(meth)acrylate, pentaerythritol tri(meth)acrylate, pentaerythritol tetra(meth)acrylate, dipentaerythritol tetra(meth)acrylate, trimethylolpropane tri(meth)acrylate, tetramethylolmethane tetra(meth)acrylate, tetramethylolmethane tri(meth)acrylate, dimethyloltricyclodecane di(meth)acrylate, modified glycerol tri(meth)acrylate, modified bisphenol A di(meth)acrylate, bisphenol A propylene oxide (PO) adduct di(meth)acrylate, bisphenol A ethylene oxide (EO) adduct di(meth)acrylate, dipentaerythritol hexa(meth)acrylate, and caprolactone-modified dipentaerythritol hexa(meth)acrylate.

This polyfunctional (meth)acrylate may be a so-called oligomer, and an oligomer is a preferred embodiment.

The 'oligomer' referred to here is usually a polymer having a limited number (usually 5 to 100) of monomer-based constituent units, and the weight-average molecular weight is preferably 400 to 10,000, and more preferably 500 to 5,000.

The oligomer has a plurality of (meth)acryloxy groups.

The oligomer in the present invention may contain any monomer-based constituent units, and examples thereof include an olefin-based oligomer (an ethylene oligomer, a propylene oligomer, a butene oligomer, etc.), a vinyl-based oligomer (a styrene oligomer, a vinyl alcohol oligomer, a vinylpyrrolidone oligomer, an acrylate oligomer, a methacrylate oligomer, etc.), a diene-based oligomer (a butadiene oligomer, a chloroprene rubber, a pentadiene oligomer, etc.), a ring-opening polymerization type oligomer (di-, tri-, tetra-ethylene glycol, polyethylene glycol, polyethylimine, etc.), an addition-polymerization type oligomer (an oligoester acrylate, a polyamide oligomer, a polyisocyanate oligomer), and an addition-condensation oligomer (a phenolic resin, an amino resin, a xylene resin, a ketone resin, etc.). Among them an oligoester (meth)acrylate is preferable, and among them a urethane (meth)acrylate, a polyester (meth)acrylate, and an epoxy (meth)acrylate are preferable, and a urethane (meth)acrylate is more preferable.

As the urethane (meth)acrylate, an aliphatic urethane (meth)acrylate and an aromatic urethane (meth)acrylate may preferably be cited, and an aliphatic urethane (meth)acrylate may more preferably be cited.

Furthermore, the urethane (meth)acrylate is preferably a di- to tetrafunctional urethane (meth)acrylate, and more preferably a di-functional urethane (meth)acrylate.

In accordance with a urethane (meth)acrylate being contained, an ink composition having excellent adhesion to recording medium and excellent curability is obtained.

With respect to the oligomer, 'Origomar Handobukku (Oligomer Handbook)' (edited by Junji Furukawa, The Chemical Daily Co., Ltd.) may also be referred to.

As oligomer commercial products, examples of urethane (meth)acrylates include R1204, R1211, R1213, R1217, R1218, R1301, R1302, R1303, R1304, R1306, R1308, R1901, and R1150 manufactured by Dai-Ichi Kogyo Seiyaku Co., Ltd., the EBECRYL series (e.g. EBECRYL 230, 270, 4858, 8402, 8804, 8807, 8803, 9260, 1290, 1290K, 5129, 4842, 8210, 210, 4827, 6700, 4450, and 220) manufactured by Daicel-Cytec Company Ltd., NK Oligo U-4HA, U-6HA, U-15HA, U-108A, and U200AX manufactured by Shin-Nakamura Chemical Co., Ltd., and Aronix M-1100, M-1200, M-1210, M-1310, M-1600, and M-1960 manufactured by Toagosei Co., Ltd.

Examples of polyester (meth)acrylates include the EBECRYL series (e.g. EBECRY L770, IRR467, 81, 84, 83, 80, 675, 800, 810, 812, 1657, 1810, IRR302, 450, 670, 830, 870, 1830, 1870, 2870, IRR267, 813, IRR483, 811, etc.) manufactured by Daicel-Cytec Company Ltd. and Aronix M-6100, M-6200, M-6250, M-6500, M-7100, M-8030, M-8060, M-8100, M-8530, M-8560, and M-9050 manufactured by Toagosei Co., Ltd.

Examples of epoxy (meth)acrylates include the EBECRYL series (e.g. EBECRYL 600, 860, 2958, 3411, 3600, 3605, 3700, 3701, 3703, 3702, 3708, RDX63182, 6040, etc.) manufactured by Daicel-Cytec Company Ltd.

The oligomer is an optional component, and one type thereof may be used on its own, or two or more types thereof may be used in combination.

The content of the oligomer in the ink composition of the present invention relative to the total amount of Component a and Component b of the ink composition is no greater than 20 wt %, more preferably 0 to 20 wt %, and yet more preferably 1 to 10 wt %.

### (Component f) Fluorine-substituted hydrocarbon group- or siloxane structure-containing polymer

The ink composition of the present invention comprises (Component f) a fluorine-substituted hydrocarbon group- or siloxane structure-containing polymer in order to impart discharge properties that are stable over a long period of time. Component f preferably contains an ethylenically unsaturated group.

Component f has an effect in reducing ink transfer (blocking properties) when a printed material having a cured image is superimposed or stacked on a recording medium. However, excessive addition thereof might cause degradation of discharge properties or image quality due to the occurrence of satellites in a printed material. The content thereof relative to the total weight of the ink composition is therefore preferably greater than 0 wt % but no greater than 3 wt %, and more preferably greater than 0.1 wt % but no greater than 1.0 wt %.

The fluorine-substituted hydrocarbon group- or siloxane structure-containing polymer (Component f) may be used on its own, in a combination of different types, or in a combination with a surfactant that does not have a fluorine-substituted hydrocarbon group or a siloxane structure.

Component f is preferably a polymer that contains one selected from the group consisting of a fluorine-substituted hydrocarbon group (in the present invention, also called a 'fluoroalkyl group'), a siloxane structure, and a long chain alkyl group having at least six carbon atoms (also called 'C6 or higher') and contains a (meth)acrylic group, and is more preferably a polymer that contains a fluoroalkyl group or a siloxane structure and contains a (meth)acrylic group.

It is surmised that, in the fluoroalkyl group-, siloxane structure-, or C6 or higher alkyl group-containing (meth)acrylic compound, these partial structures or groups act as surface orientation groups and segregate on the surface of the ink composition, thus enabling the surface tension of discharged ink liquid droplets to be adjusted in an appropriate range and, therefore, when the ink composition of the present invention is used for inkjet recording, ink discharge properties are improved.

Component f is preferably a polymer containing in a main chain a urethane bond or a urea bond and in a side chain a radically polymerizable group and a surface orientation group, which is a fluoroalkyl group, a siloxane structure, or a C6 or higher alkyl group, these being explained in detail below. Hereinafter, this polymer is also called a 'specific polymerizable polymer (f1)'.

The specific polymerizable polymer (f1) preferably has a fluoroalkyl group in a side chain and more preferably has a siloxane structure in a side chain, and it is surmised that either the group or the structure functions as a surface orientation group and segregates on the surface of the ink composition, thus improving discharge properties.

Furthermore, since there is a polymerizable group in a side chain, it is surmised that a polymerizable group that is present in the vicinity of the surface of the discharged ink composition efficiently forms a crosslinked structure by radiation and quickly cures to thus form a strong coating. It is surmised that, because of this, the ink image surface has excellent antiblocking properties and, since the crosslink density in the interior is low compared with the addition of a usual polyfunctional monomer, a balance between flexibility, curability, and antiblocking properties is achieved.

The specific polymerizable polymer (f1) is explained below.

Examples of the specific polymerizable polymer (f1) include (f11) a polyaddition-type polymer that contains in a main chain a urethane bond or a urea bond and in a side chain an ethylenically unsaturated group and at least one selected from the group consisting of a fluoroalkyl group, a siloxane structure, and a long chain alkyl group and (f12) an addition-polymerization polymer that contains an ethylenically unsaturated group and one selected from the group consisting of a fluorine-substituted hydrocarbon group, a siloxane structure, and a long chain alkyl group having 6 or more carbon atoms, and that is a homopolymer, and preferably a copolymer, of an ethylenically unsaturated monomer, and they are together explained below.

The siloxane structure contained in the specific polymerizable polymer (f1) preferably has at least a unit structure represented by Formula (1) below. 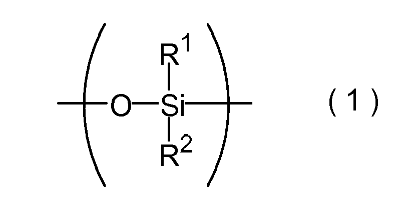 wherein R¹ and R² independently denote a phenyl group or an alkyl group having 1 to 18 carbon atoms that may have a branched structure.

It is more preferable that one of R¹ and R² in Formula (1) is a methyl group, and it is particularly preferable that both R¹ and R² are methyl groups.

The repeat number of the above-mentioned unit structure is preferably 5 to 10.

The fluoroalkyl group-containing constituent unit contained in the polymer of Component f is preferably a constituent unit represented by Formula (I) below. 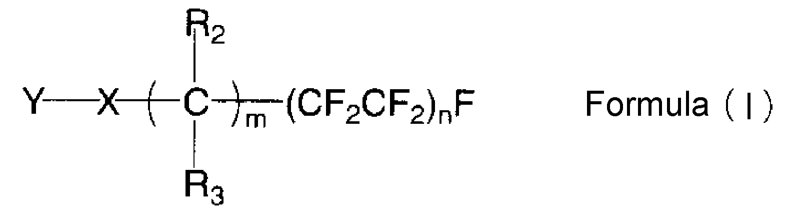 wherein R₂ and R₃ independently denote a hydrogen atom or an alkyl group having 1 to 4 carbon atoms, Y denotes a polymer main chain, X denotes a single bond or a divalent linking group (organic group), m denotes an integer of 0 or greater, and n denotes an integer of 1 or greater. When m is 2 or greater, functional groups on adjacent carbons (that is, R₂s or R₃s respectively bonding to adjacent carbons) may be bonded to form an aliphatic ring.

The polymer used as Component f is preferably a perfluoroalkyl group-containing polymer, and examples of such a perfluoroalkyl group-containing polymer include a fluorochemical surfactant described in the published Japanese translation 2004-536925 of a PCT application, a fluorine-based copolymer formed by polymerization using at least a fluorinated alkyl group- and ethylenic double bond-containing monomer and a silicone chain- and ethylenic double bond-containing monomer described in JP-A-2007-003945, and a fluorine-based surfactant having a perfluoroalkyl group in the molecule described in JP-A-2004-323578.
(f11) Polyaddition-type polymer having in main chain urethane bond or urea bond and in side chain ethylenically unsaturated group and at least one selected from the group consisting of fluoroalkyl group, siloxane structure, and long chain alkyl group (hereinafter, also called simply a 'polyaddition-type specific polymerizable polymer (f11)')

The specific polymerizable polymer (f1) used in the present invention includes (f11) a polyaddition-type polymer containing in a main chain a urethane bond or a urea bond and in a side chain an ethylenically unsaturated group and a surface orientation group such as a fluoroalkyl group.

### (f11) Polyaddition-type specific polymerizable polymer

The chemical structure of the main chain of the polyaddition-type specific polymerizable polymer (f11) includes a polyurethane structure formed by a reaction between a diisocyanate and a polyol component such as a diol or a polyurea structure formed from a diisocyanate and a diamine component.

Examples of the diisocyanate that can form a polyurethane structure or a polyurea structure include tolylene diisocyanate, isophorone diisocyanate, hexamethylene diisocyanate, trimethylhexamethylene diisocyanate, norbornene diisocyanate, dicyclohexylmethane-4,4-diisocyanate, diphenylmethane-4,4-diisocyanate, and dimer acid diisocyanate.

Examples of the polyol component that can form a polyurethane structure include ethylene glycol, polyethylene glycol, propylene glycol, polypropylene glycol, 1,4-butanediol, 2,3-butanediol, 1,3-butanediol, neopentyl glycol, methylpentanediol, 1,6-hexanediol, trimethylhexamethylenediol, 2-methyloctanediol, 1,9-nonanediol, 1,4-cyclohexanedimethanol, tricyclodecanedimethanol, polycaprolactone diol, polycarbonate diol, glycerol, trimethylolpropane, trimethyloloctane, pentaerythritol, and polytetramethylene glycol.

Among them, from the viewpoint of reducing the viscosity of the ink composition obtained, it is preferable to use a polyol having a molecular weight of no greater than 1,000, and it is more preferable to use a diol having a molecular weight of 60 to 1,000.

Examples of the diamine that can form a polyurea structure include ethylenediamine, an N-alkylethylenediamine, propylenediamine, 2,2-dimethyl-1,3-propanediamine, an N-alkylpropylenediamine, butylenediamine, an N-alkylbutylenediamine, pentanediamine, hexamethylenediamine, an N-alkylhexamethylenediamine, heptanediamine, octanediamine, nonanediamine, decanediamine, dodecanediamine, hexadecanediamine, tolylenediamine, xylylenediamine, diaminodiphenylmethane, diaminodicyclohexylmethane, phenylenediamine, cyclohexylenediamine, bis(aminomethyl)cyclohexane, diaminodiphenylsulfone, isophoronediamine, 2-butyl-2-ethyl-1,5-pentamethylenediamine, 2,2,4- or 2,4,4-trimethyl-1,6-hexamethylenediamine, 2-aminopropylcyclohexylamine, 3(4)-aminomethyl-1-methylcyclohexylamine, 1,4-diamino-4-methylpentane, a terminal amine polyoxyalkylene polyol (known as a Jeffamine), and a terminal amine polytetramethylene glycol.

In the present invention, when synthesizing the polyaddition-type specific polymerizable polymer (f11), a polymerizable urethane compound, etc. may be obtained by a single stage reaction using an ethylenically unsaturated group-containing diol or an ethylenically unsaturated group-containing diisocyanate as a starting material.

### Ethylenically unsaturated group

The polyaddition-type specific polymerizable polymer (f11) in the present invention has an ethylenically unsaturated group in a side chain. Furthermore, this ethylenically unsaturated group is preferably a (meth)acryloyloxy group and/or a (meth)acrylamide group.

Since the specific polymerizable polymer contains an ethylenically unsaturated group, the curability of the ink composition improves, surface tackiness is suppressed, and blocking properties are improved.

The polyaddition-type specific polymerizable polymer (f11) contains a radically polymerizable ethylenically unsaturated bond in a side chain.

Examples of radically polymerizable ethylenically unsaturated group-containing polymerizable groups include unsaturated carboxylate ester groups such as an acrylate ester group, a methacrylate ester group, an itaconate ester group, a crotonate ester group, an isocrotonate ester group, and a maleate ester group and radically polymerizable groups such as a styrene group. Among them, a methacrylate ester group and an acrylate ester group are preferable.

From the viewpoint of surface curability and anti-blocking properties, the number of ethylenically unsaturated groups in one molecule of the specific polymerizable polymer (f1) is 5 or greater on average per polymer molecule, and more preferably 7 or greater.

The number of ethylenically unsaturated groups contained in the specific polymerizable polymer (f1) may be determined from molecular weight measurement and iodine value measurement as in the Wijs method, the Hanus method, etc.

The content of the ethylenically unsaturated group is preferably 0.3 mmol/g to 3 mmol/g in the specific polymerizable polymer, more preferably 0.3 mmol/g to 2.5 mmol/g, and particularly preferably 0.3 mmol/g to 2 mmol/g.

In general, as a method for introducing an ethylenically unsaturated group into the main chain of the specific polymerizable polymer (f1), there can be cited a method in which a monomer with an ethylenically unsaturated group as a radically polymerizable group made unreactive by a protecting group is subjected to copolymerization, and the protecting group is then removed to give a radically polymerizable group (ethylenically unsaturated group), and a method in which a low-molecular-weight compound having a radically polymerizable group is introduced by a polymer reaction to give the specific polymerizable polymer (f1). In the present invention, when the main chain has a urethane structure or a urea structure and polymerization is carried out by a polycondensation reaction, there is the advantage that a given amount of polymerizable group can easily be introduced into the polymer by carrying out a polyaddition reaction using an ethylenically unsaturated group-containing starting material.

Since the polyaddition-type specific polymerizable polymer (f11) in the present invention has a polyurethane structure or a polyurea structure in a main chain, as described above an ethylenically unsaturated group can easily be introduced by the use of an ethylenically unsaturated group-containing polyol, a polymerizable group-containing diamine, etc.

Examples of the ethylenically unsaturated group-containing polyol that can be used in the present invention include bisphenol A glycerolate dimethacrylate, N,N'-(1,2-dihydroxyethylene)bisacrylamide, 1,6-hexanediylbis[oxy(2-hydroxy-3,1 1-propanediyl)]bisacrylate, 3-allyloxy-1,2-propanediol, and N-[tris(hydroxymethyl)methyl] acrylamide. Such compounds are commercially available, and examples thereof include Blemmer GLM (NOF Corporation).

The specific polymerizable polymer (f1) in the present invention contains in a side chain a group or structure (together called a 'surface orientation group') selected from the group consisting of a fluoroalkyl group, a siloxane structure, and a long chain alkyl group. These partial structures are explained below.

### (a1) Fluoroalkyl group

The fluoroalkyl group of the specific polymerizable polymer in the present invention has the same meaning as a 'fluorine-substituted hydrocarbon group', and includes an alkylene group, as well as an alkyl group, substituted with at least one fluorine atom. Here, with regard to the substitution number for hydrogen atoms of the alkyl group or alkylene group replaced by fluorine atoms, a fluoroalkyl group having at least one fluorine atom can be cited, perfluoroalkyl and perfluoroalkylene groups having all hydrogen atoms of the alkyl and alkylene groups replaced by fluorine atoms are preferable, and a perfluoroalkyl group is more preferable.

The fluoroalkyl group preferably has 3 to 12 carbon atoms, more preferably 4 to 10 carbon atoms, and particularly preferably 6 to 8 carbon atoms.

The fluoroalkylene group preferably has 2 to 12 carbon atoms, more preferably 4 to 10 carbon atoms, and particularly preferably 6 to 8 carbon atoms.

Specific embodiments of the fluorine-substituted hydrocarbon group in the present invention are explained.

As preferred fluorine-substituted hydrocarbon groups of the specific polymerizable polymer, those shown in (A) or (B) below can be cited.

### (A) A substituent derived from a fluoroaliphatic compound produced by a telomerization method or an oligomerization method (also appropriately called a fluoroaliphatic group)

The fluorine-substituted alkyl group described above is preferably substituted group derived from fluoroaliphatic compound (fluoroaliphatic group) produced by a telomerization method (also called a telomer method) or an oligomerization method (also called an oligomer method). With regard to a production process for the fluoroaliphatic compound, it is described in, for example, 'Synthesis and Function of Fluorine Compounds' (Editor: Nobuo Ishikawa, published by CMC, 1987) pp. 117 to 118 or 'Chemistry of Organic Fluorine Compounds II' (Monograph 187, Ed by Milos Hudlicky and Attila E. Pavlath, American Chemical Society 1995) pp. 747 to 752.

The telomerization method referred to is a method in which a telomer is synthesized by carrying out radical polymerization of a fluorine-containing vinyl compound such as tetrafluoroethylene using as a telogen an alkyl halide having a large chain transfer constant such as an iodide. As a specific example, Synthetic Example 1 below is cited.

### Synthetic Example 1

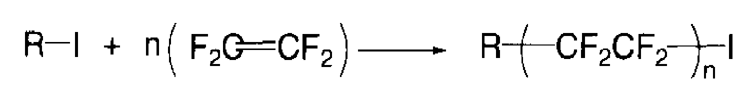

The terminally iodinated telomer thus obtained is normally subjected to an appropriate terminal chemical modification such as one in Synthetic Example 2 below, to give fluoroaliphatic compounds. These compounds are further converted into desired monomer structures, and used in the production of a polymer having a fluoroaliphatic group in the side chain such as specified polymerizable polymer in the present invention.

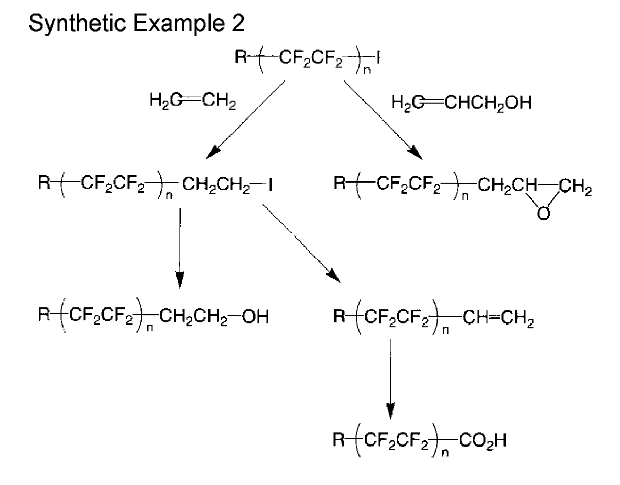

In the present inbention, as a fluoroaliphatic compound synthesized by the telomer method above, a fluoroaliphatic compound represented by Formula [TM-1] below is preferable.

Such a fluoroaliphatic compound may be used as it is or after being converted into a desired monomer structure, thereby introducing a fluorine-substituted hydrocarbon group into the specific polymerizable polymer in the present invention.

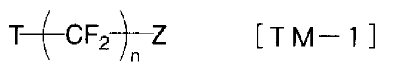

In Formula [TM-1] above, T denotes one type of group selected from Group T below, Z denotes one type of group selected from Group Z below, and n denotes an integer of 0 to 20.

When a fluoroaliphatic compound represented by Formula [TM-1] above has a polymerizable group such as a double bond in Z, it may be used as a copolymerization component when synthesizing the specific polymerizable polymer of the present invention.

### (Group T)

—CF₃

— CF₂CF₃

— CF₂CF₂CF₃

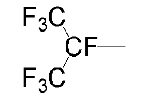

— CF₂CF₂H

### (Group Z)

| | |
|---|---|
| —CH₂OH | —CH=HCH₂OH |
| CH₂CH₂OH | CH₂CHlCH₂OH |
| 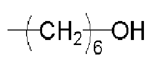 | —CF(CF₃)CH₂OH |
| —CO₂H | —I |
| —COCl | —Br |
| 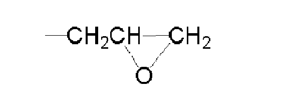 | -CH₂CH₂I |
| —H=CH₂ | —CH₂I |
| | —CH₂NH₂ |
| 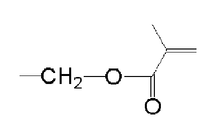 | 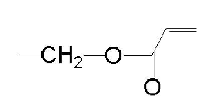 |
| 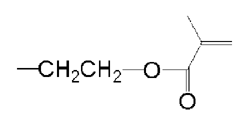 | 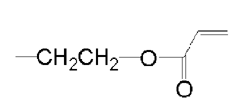 |
| 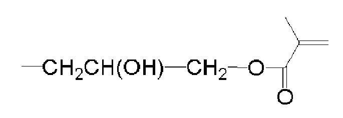 | |
| 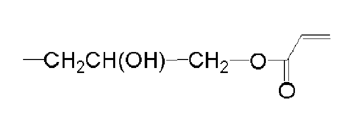 | |

In Formula [TM-1] above, when a group denoted by Z is one type of group selected from (group Z') below, this gives a structure containing an acryloyl group or a methacryloyl group at the molecular terminal. This is particularly preferable since the specific polymerizable polymer in the present invention is more simply obtained by polyaddition from a fluoroaliphatic compound represented by Formula [TM-1].

### (Group Z')

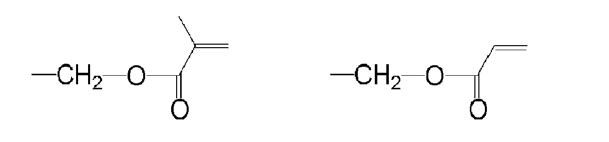

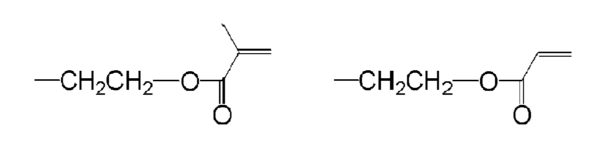

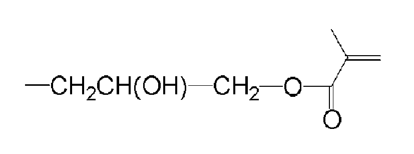

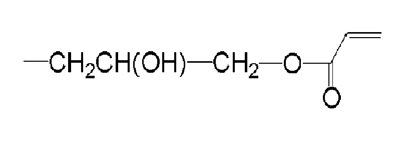

The specific examples of the compound produced by the above-mentioned telomer method, which is suitable as a compound to synthesize (f1) a specific polymerizable polymer used in the prevent invention (commercial products containing a fluoroaliphatic compound represented by Formula [TM-1] above), include the fluorine-based chemical products A-1110, A-1210, A-1310, A-1420, A-1620, A-1820, A-2020, A-1260, A-1460, A-1660, A-1860, A-1435, A-1635, A-1835, A-1473, A-1637, A-1837, A-1514, A-3420, A-3620, A-3820, A-4020, A-3260, A-3460, A-3660, A-3860, A-3637, A-3837, A-5210, A-5410, A-5610, A-5810, A-7110, A-7210, A-7310, A-9211, C-1100, C-1200, C-1300, C-1400, C-1500, C-1600, C-1700, C-1800, C-1900, C-2000, C-5200, C-5400, C-5600, C-5800, C-5208, C-5408, C-5608, C-6008, C-8200, C-8300, C-8500, C-9211, C-8208, C-8308, C-8508, C-9216, E-1430, E-1630, E-1830, E-2030, E-3430, E-3630, E-3830, E-4030, E-5244, E-5444, E-5644, E-5844, F-1420, F-1620, F-1820, F-2020, I-1200, I-1300, I-1400, I-1600, I-1700, I-1800, I-2000, I-1420, I-1620, I-1820, I-2020, I-3200, I-3400, I-3600, I-3800, I-4000, I-3620, I-3820, I-4020, I-5200, I-5400, I-5600, I-8208, I-8207, I-8407, I-8607, M-1110, M-1210, M-1420, M-1620, M-1820, M-2020, M-3420, M-3620, M-3820, M-4020, M-3433, M-3633, M-3833, M-4033, M-5210, M-5410, M-5610, M-5810, M-6010, M-7210, M-7310, R-1110, R-1210, R-1420, R-1620, R-1820, R-2020, R-1433, R-1633, R-1833, R-3420, R-3620, R-3820, R-4020, R-3433, R-5210, R-5410, R-5610, R-5810, R-6010, R-7210, R-7310, U-1310, and U-1710 available from Daikin Chemicals Sales Co., Ltd., and CHEMINOX FA, FA-M, FAAC, FAAC-M, FAMAC, and FAMAC-M manufactured by Nippon Mektron, Ltd.

A polymer having a fluoroaliphatic group in a side chain such as the specific polymerizable polymer in the prevent invention can easily be derived from the fluoroaliphatic compounds produced by the telomer method by a method known to a person skilled in the art.

In the present invention, a substituent group derived from a fluoroaliphatic compound produced by an oligomerization method (oligomer method) is also preferable.

The oligomerization method is a method in which an oligomer is produced by cationically polymerizing tetrafluoroethylene in a polar solvent such as diglyme using potassium fluoride or cesium fluoride as a catalyst. As a specific example, Synthetic Example 3 below is illustrated.

A polymer having a substituent (a fluoride-containing hydrocarbon group) derived from the fluoroaliphatic compound in a side chain may be derived from a fluoroaliphatic compound obtained by the oligomer method, via appropriate chemical modification by utilizing a polymerizable group (unsaturated bond), etc. in the oligomer obtained by the cationic polymerization in the same manner as for the compound from the above-mentioned telomer method.

### Synthetic Example 3

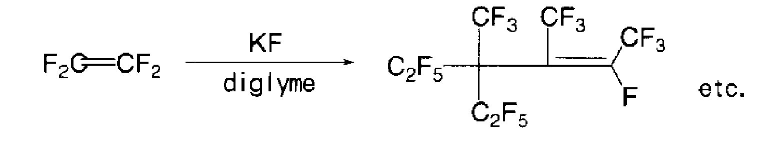

### (B) Substituent represented by (Formula I) below

From the viewpoint of localization on the ink surface, the specific polymerizable polymer in the present invention preferably has a substituent represented by (Formula I) below.

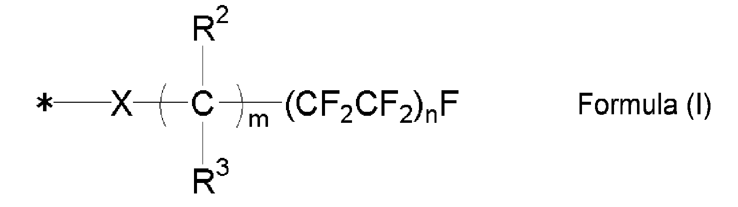

In Formula (I) above, R₂ and R₃ denote a hydrogen atom or an alkyl group having 1 to 4 carbons respectively, X denotes a single bond or a divalent linking group (organic group), m denotes an integer of 0 or greater, and n denotes an integer of 1 or greater. When m is 2 or greater, functional groups on adjacent carbons (i.e. R₂s or R₃s bonded to adjacent carbons) may be bonded to form an aliphatic ring.

The substituent represented by Formula I is bonded to polymer main chain at the * position.

Among substituents represented by Formula (I) above, n in Formula (I) is preferably 1 to 10, more preferably 1 to 4, and particularly preferably 2 or 3.

With regard to the specific polymerizable polymer in the present invention, the structure of a side chain moiety bonded to the polymer main chain has a structure represented by Formula (IB) below and, in particular, if n = 2 or 3, very good performance is exhibited. 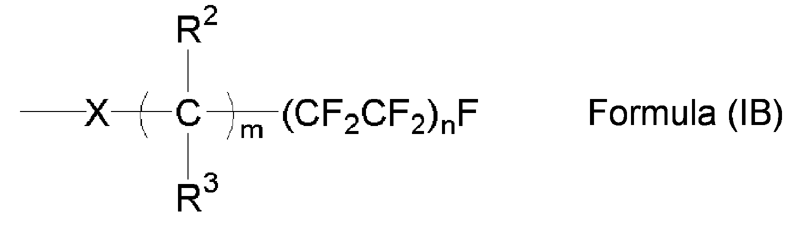 wherein R₂ and R₃, X, m, and n have the same meanings as those of R₂ and R₃, X, m, and n in Formula (I).

In Formula (I) and Formula (IB), examples of the alkyl group having 1 to 4 carbons denoted by R₂ and R₃ include a methyl group, an ethyl group, a propyl group, an isopropyl group, an n-butyl group, an isobutyl group, and a tert-butyl group, and are preferably a hydrogen atom or a methyl group, and more preferably a hydrogen atom.

In Formula (I) and Formula (IB), when X is a single bond, it is meant that the carbon atom which R² and R³ are bonded is directly bonded to a polymer main chain.

Furthermore, when X is divalent linking group, examples of the divalent linking group include -O-, -S-, -N(R⁴)-, and -CO-. Among them, -O- is preferable.

Furthermore, R⁴ denotes a hydrogen atom or an alkyl group having 1 to 4 carbons. Examples of the alkyl group include a methyl group, an ethyl group, a propyl group, an isopropyl group, an n-butyl group, an isobutyl group, and a tert-butyl group, and are preferably a hydrogen atom or a methyl group.

In Formula (I) and Formula (IB), m denotes an integer of 0 or greater, preferably an integer of 2 to 8, and 2 is particularly preferable. When m is 2 or greater, functional groups on adjacent carbons each other (that is, R²s and R³ s bonded to adjacent carbons respectively) may be bonded to each other to form an aliphatic ring.

In Formula (I) and Formula (IB), n denotes an integer of 1 or greater, and preferably an integer of 1 to 10, more preferably 1 to 4, and particularly preferably 2 or 3.

In Formula (I) * denotes a connecting position to a polymer main chain. Examples of the polymer main chain include those below.

Examples of the polymer main chain include an acrylic resin, a methacrylic resin, a styryl resin, a polyester resin, a polyurethane resin, a polycarbonate resin, a polyamide resin, a polyacetal resin, a phenol/formaldehyde condensation resin, a polyvinylphenol resin, a maleic anhydride/α-olefin resin, and an α-hetero substituted methacrylic resin. Among them, an acrylic resin, a methacrylic resin, a styryl resin, a polyester resin, and a polyurethane resin are useful, and an acrylic resin, a methacrylic resin, and a polyurethane resin are particularly useful.

### (C) Polymerizable polymer (f2) having different structure from that of specific polymerizable polymer (f1)

The ink composition of the present invention may comprise, in addition to the specific polymerizable polymer (f1), a known polymerizable polymer, usually used in a curable composition, having a different structure from that of the above. Hereinafter, such a polymerizable polymer is called (f2) 'other polymerizable polymer' as appropriate. With regard to the other polymerizable polymer (f2), either a radically polymerizable compound or a cationically polymerizable compound may be used according to the intended application.

Relative to the total amount of (Component a and Component b), the other polymerizable polymer is preferably in the range of 0 to 50 wt %, more preferably 0 to 40 wt %, and particularly preferably 0 to 25 wt %, and a case in which it is not contained at all is also included.

The fluorine-substituted hydrocarbon group-containing specific polymerizable polymer (f1) used in the present invention may be easily obtained by, for example, a method known to a person skilled in the art such as polycondensation, addition polymerization, or ring-opening polymerization while appropriately selecting and using a monomer containing the above-mentioned fluoroaliphatic group (A) or a monomer containing the substituent (B) represented by (Formula I) above (that is, a monomer containing a fluorine-substituted hydrocarbon group). Furthermore, it may be produced by combined use of these monomers as necessary.

### (Fluorine-substituted hydrocarbon group-containing monomer)

In the present invention, as described above, the specific polymerizable polymer (f1) is obtained by the use of a monomer containing a fluorine-substituted hydrocarbon group (hereinafter, called a 'fluorine-substituted hydrocarbon group-containing monomer').

Preferred examples of the fluorine-substituted hydrocarbon group-containing monomer include monomers represented by (Formula II) below. 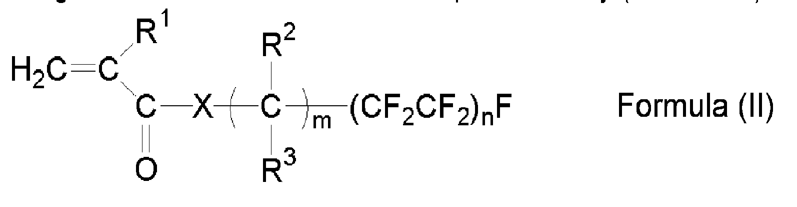 wherein R¹ denotes a hydrogen atom or a methyl group. R² and R³ independently denote a hydrogen atom or an alkyl group having 1 to 4 carbon atoms, X denotes a single bond or a divalent linking group (organic group), m denotes an integer of 0 or greater, and n denotes an integer of 1 or greater. When m is 2 or greater, functional groups on adjacent carbon atoms (that is, R²s or R³s respectively bonding to adjacent carbons) may be bonded to form an aliphatic ring.

n in (Formula II) is preferably 1 to 10, more preferably 1 to 4, and particularly preferably 2 or 3.

Specific examples of a (meth)acrylate represented by Formula (II) above used in the present invention are shown below.

### (n=4 Specific Examples)

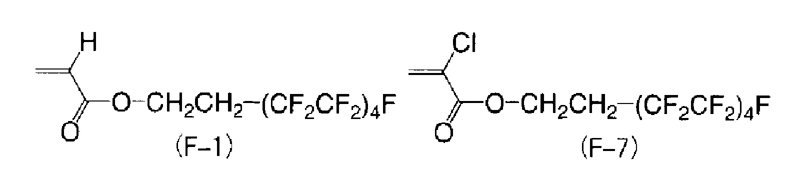

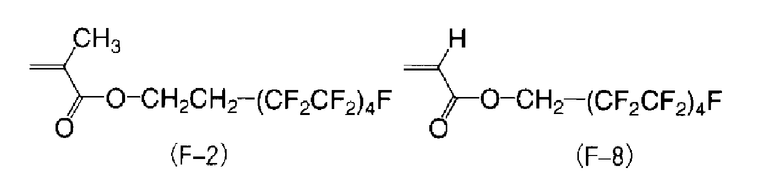

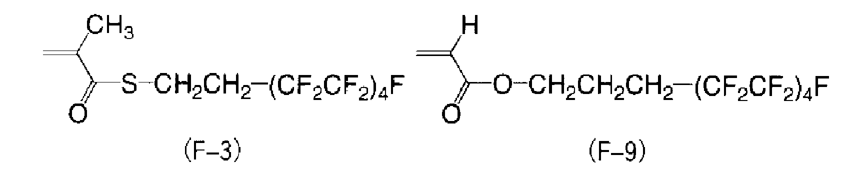

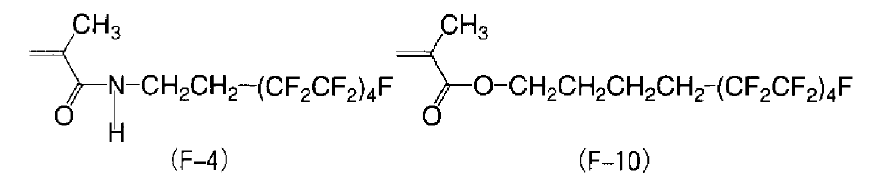

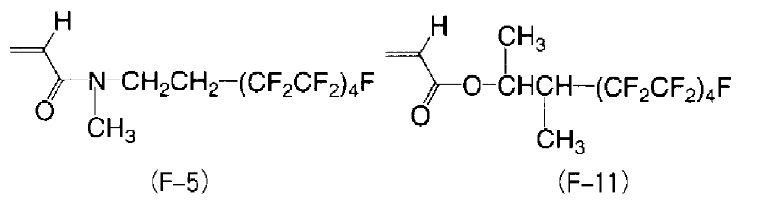

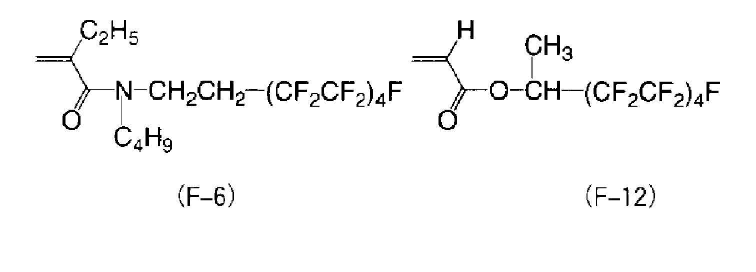

### (n=3 Specific Examples)

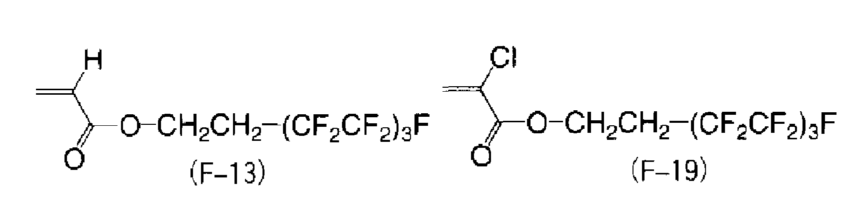

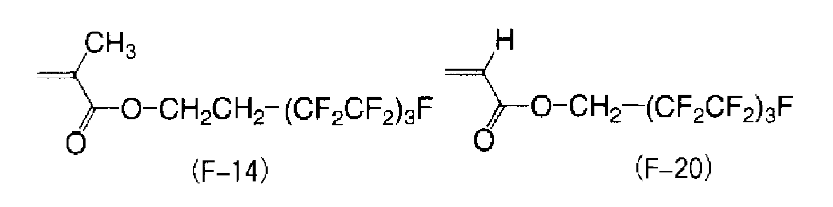

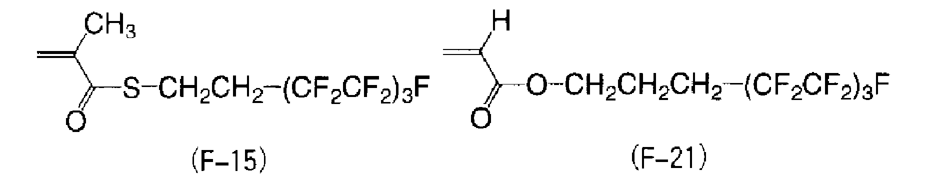

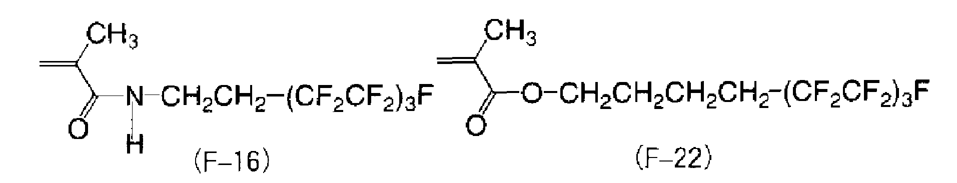

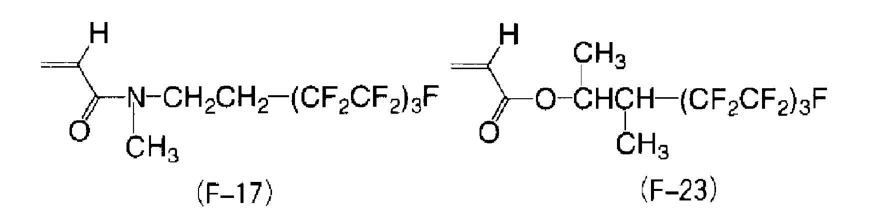

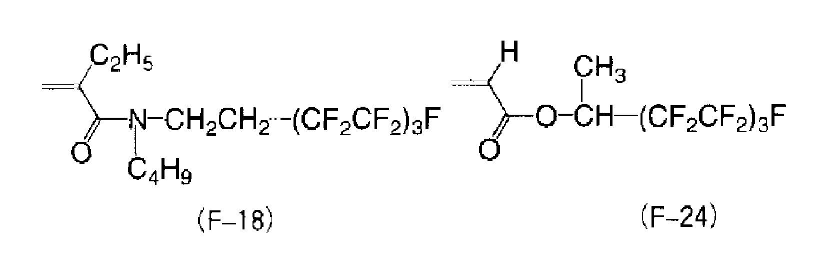

### (n=1 Specific Examples)

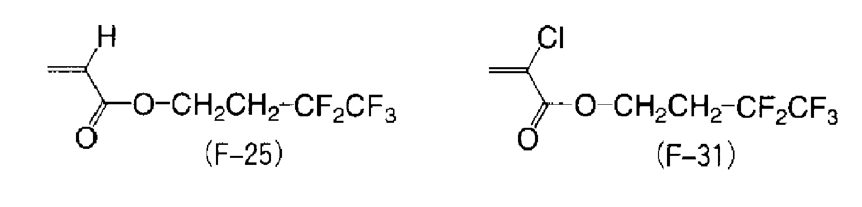

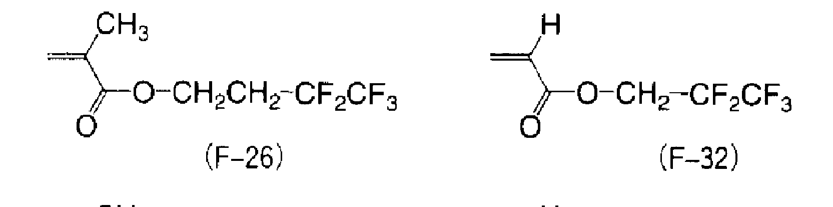

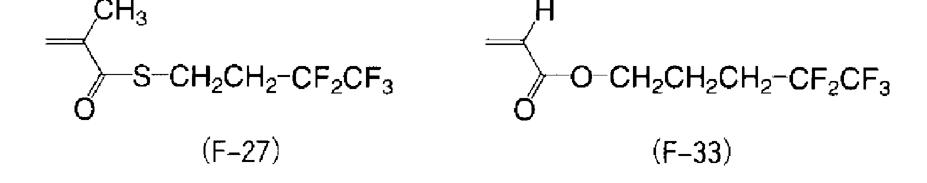

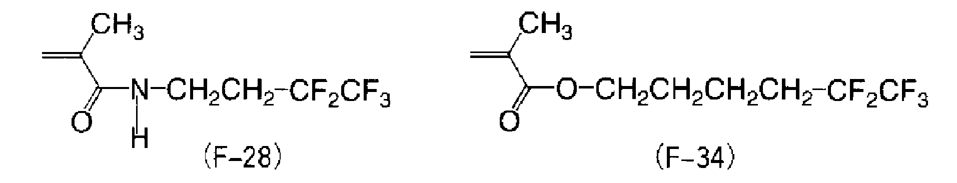

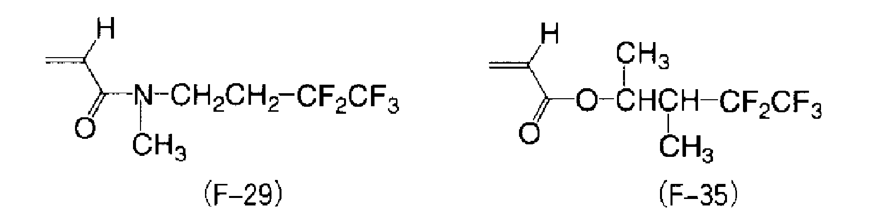

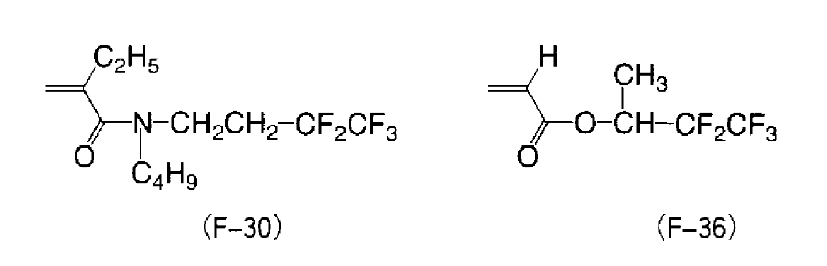

### (n=2 Specific Examples)

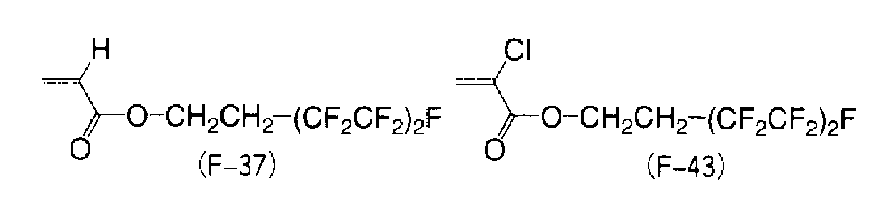

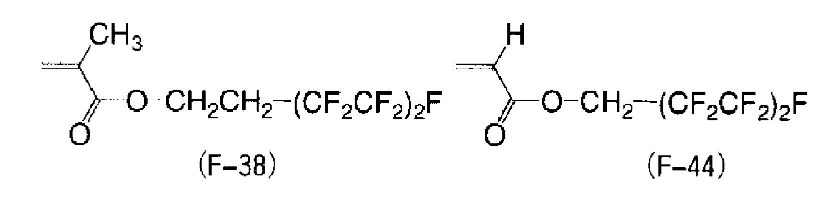

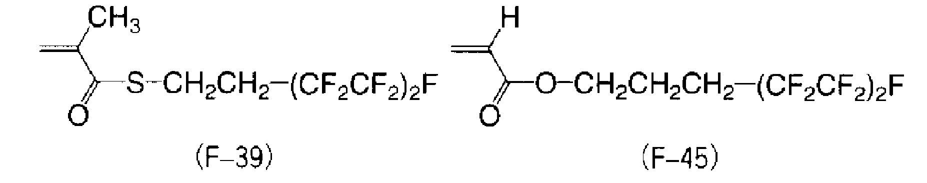

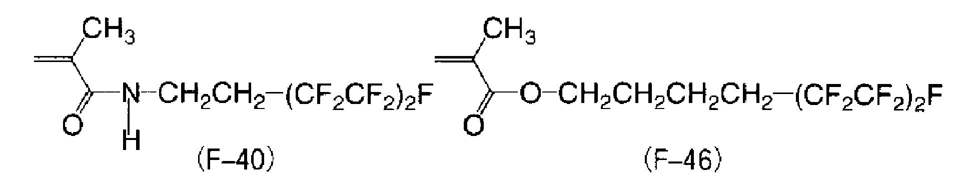

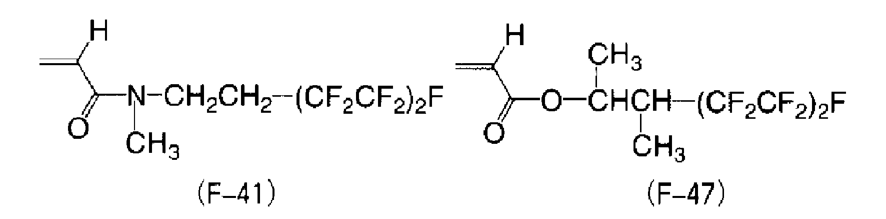

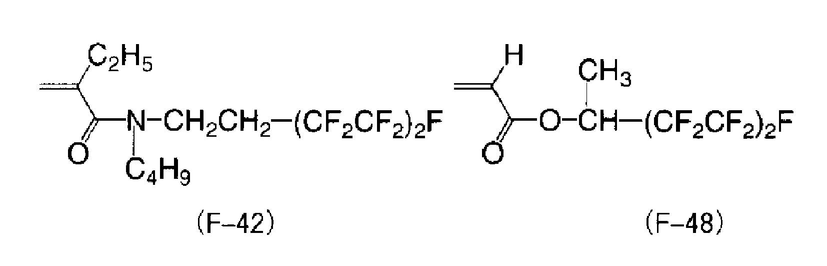

By the use of a fluoroalkyl group-containing diol as a diol used for forming the urethane structure-containing main chain, a fluoroalkyl group can be introduced into the specific polymerizable polymer (f1). A fluoroalkyl group-containing diol may be obtained by treating a terminal epoxy group-containing fluoroalkyl group with an acid catalyst in accordance with a method described in JP-A-2005-126357, and in accordance with such a method, for example, a fluoroalkyl 1,2-diol can be obtained in good yield.

A specific method for synthesizing 3-perfluorohexyl-1,2-propanediol is described below. One with a fluoroalkyl group having a different number of carbon atoms may also be obtained by a similar method.

A reactor equipped with a stirrer, a thermometer, a reflux condenser, and a nitrogen inlet tube was charged with 400 g (4 mol) of methyl isobutyl ketone and 1.55 g (0.05 mol) of a 50% diethyl ether solution of boron trifluoride-diethyl ether complex, 376 g (1 mol) of E-1630 was added thereto dropwise at 25°C over 30 minutes while stirring, and stirring was carried out at 25°C for 1 hour and at 100°C for 1 hour, thus forming a 1,3-dioxolane.

Subsequently, the reactor was charged with 54 g (3 mol) of water and heated; because of water/methyl isobutyl ketone being distilled azeotropically, the methyl isobutyl ketone was removed by a water separator and the water was returned to the reactor.

After 3 hours, distillation of methyl isobutyl ketone stopped, heating and refluxing were carried out for a further 2 hours, and the reactor was then evacuated at 100°C until the pressure reached 1 kPa or less to remove excess water, thus giving 373 g of a transparent crude product (crude yield 95%).

When this crude product was analyzed using gas chromatography, it was found that it contained 3-perfluorohexyl-1,2-propanediol at 98 wt % (yield 93%).

Furthermore, in order to introduce a fluoroalkyl group into the specific polymerizable polymer (f1), a fluoroalkyl group-containing compound having an epoxy group may be used. Such epoxy group-containing fluoroalkyl compounds are commercially available, and examples thereof include E-1430, E-1630, E-1830, E-2030, E-5244, E-5444, E-5644, E-5844, and E-7432 manufactured by Daikin.

### [(a2) Siloxane structure]

The siloxane structure contained in the specific polymerizable polymer in the present invention is not particularly limited as long as it has a siloxane skeleton represented by '-Si-O-Si-' as a partial structure.

In the present invention, from the viewpoint of improving discharge stability of the ink composition and increasing surface segregation when the ink composition is made into a coating, the siloxane structure-containing specific polymerizable polymer is preferably a compound constituted by containing a constituent unit having a siloxane structure in a side chain.

Siloxane compounds that are useful when introducing a siloxane structure into the molecule of the specific polymerizable polymer (f1) are commercially available, and examples thereof include a single terminal reactive silicone such as X-22-173DX or X-22-173BX manufactured by Shin-Etsu Chemical Co., Ltd.

Synthesis may also be carried out by reacting a siloxane having a reactive terminus and a cationically polymerizable group-containing compound. For example, synthesis may be carried out from a single terminal hydroxy group-containing compound such as the Silaplane series FM-0411, FM-0421, or FM-0425 manufactured by Chisso Corporation and epichlorohydrin or by a method described in JP-A-11-80315.

In the specific polymerizable polymer (f1), from the viewpoint of adjustment of surface tension of the ink composition, solubility, ink viscosity, etc., the content of the portion derived from the siloxane compound (siloxane structure constituent unit) is 1 wt % to 50 wt %, more preferably 2 wt % to 40 wt %, and most preferably 3 wt % to 30 wt %.

In the specific polymerizable polymer (f1), from the viewpoint of the specific polymerizable polymer improving surface orientation of ink liquid droplets, the molecular weight of the portion derived from the siloxane compound (siloxane structure constituent unit) is preferably 300 to 10,000, and more preferably 300 to 3,000.

From the viewpoint of viscosity and curing sensitivity of the ink composition, the weight-average molecular weight of the specific polymerizable polymer (f1), related to the present invention, having such a partial structure in a side chain is preferably 2,000 to 100,000, more preferably 3,000 to 80,000, and most preferably 5,000 to 60,000. This weight-average molecular weight may be obtained by a GPC measurement method.

From the viewpoint of discharge stability and solubility, the partial structure having a segregation portion such as a siloxane structure in the specific polymerizable polymer is preferably 1 wt % to 50 wt %, more preferably 2 wt % to 40 wt %, and most preferably 3 wt % to 30 wt %.

From the viewpoint of curing sensitivity and maintaining flexibility, the polymerizable group-containing constituent unit in the specific polymerizable polymer is 10 wt % to 90 wt %, more preferably 15 wt % to 90 wt %, and most preferably 20 wt % to 90 wt %. When the content of the polymerizable group is in the above-mentioned range, a sufficient blocking suppression effect is obtained, and film flexibility is maintained in an appropriate range. Therefore, when a conventionally known urethane oligomer having 2 to 4 terminal polymerizable groups is used instead of the specific polymerizable polymer, sufficient performance cannot be obtained.

### [(a3) Long chain alkyl group having 6 or more carbon atoms]

Hereinafter, the long chain alkyl group having 6 or more carbon atoms is simply called a 'long chain alkyl group'.

The long chain alkyl group is not particularly limited as long as it is an alkyl group having a number of carbon atoms of 6 or greater, and can be any of straight-chain, branched, and cyclic forms, but a straight chain form is preferable. The number of carbon atoms is preferably 6 to 40, more preferably 6 to 18, and particularly preferably 6 to 12.

The alkyl group having 6 or more carbon atoms present in a side chain of the specific polymerizable polymer (f1) contained in the ink composition of the present invention is -CₙH₂ₙ₊₁ in Formula (III) below in which the number of carbon atoms is n, and it is preferably introduced into the specific polymerizable polymer by being contained as a constituent unit represented by Formula (III). 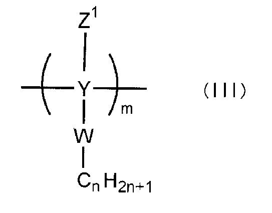 wherein m denotes a non-negative integer representing degree of polymerization, and n denotes an integer of 6 to 40, preferably 6 to 18, and from the viewpoint of segregation more preferably 6 to 12.

Y denotes a polymer main chain, and -CₙH₂ₙ₊₁ (alkyl group having 6 or more carbon atoms) is bonded directly or via a linking group to the main chain.

W denotes a single bond or a linking group; when it denotes a single bond, the long chain alkyl group is bonded directly to the polymer main chain. Z¹ denotes a hydrogen atom or a monovalent substituent.

A plurality of alkyl groups having 6 or more carbon atoms in Formula (III) may be present in the constituent unit, and in this case there is a mode in which an alkyl group having 6 or more carbon atoms is bonded at the position of Z¹ via the linking group W or a mode in which the linking group W has a branched structure or a ring structure and another alkyl group having 6 or more carbon atoms is connected to any of the extremity carbon atoms constituting W.

Examples of W above include a straight chain or branched, open-chain or cyclic alkylene having 1 to 20 carbon atoms, a straight chain or branched, open-chain or cyclic alkenylene having 2 to 20 carbon atoms, an alkynyl group having 2 to 20 carbon atoms, an arylene having 6 to 20 carbon atoms (monocyclic, heterocyclic), -OC(=O)-, -OC(=O)Ar-, -OC(=O)O-, -OC(=O)OAr-, -C(=O)NR-, -C(=O)NAr-, -SO₂NR-, -SO₂NAr-, -O- (alkyleneoxy, polyalkyleneoxy), -OAr- (aryleneoxy, polyaryleneoxy), -C(=O)O-, -C(=O)O-Ar-, -C(=O)Ar-, -C(=O)-, -SO₂O-, -SO₂OAr-, -OSO₂-, -OSO₂Ar-, -NRSO₂-, - NArSO₂-, -NRC(=O)-, -NArC(=O)-, -NRC(=O)O-, -NArC(=O)O-, -OC(=O)NR-, - OC(=O)NAr-, -NAr-, -NR-, -N+RR'-, -N+RAr-, -N+ArAr'-, -S-, -SAr-, -ArS-, a heterocyclic group (3- to 12-membered monocyclic or fused ring having at least one heteroatom such as nitrogen, oxygen, or sulfur), -OC(=S)-, -OC(=S) Ar-, -C(=S)O-, -C(=S)OAr-, -C(=S)OAr-, -C(=O)S-, -C(=O)SAr-, -ArC(=O)-, - ArC(=O)NR-, -ArC(=O)NAr-, -ArC(=O)O-, -ArC(=O)O-, -ArC(=O)S-, - ArC(=S)O-, -ArO-, and -ArNR-.

R and R' above denote a hydrogen atom, a straight-chain or branched alkyl group, an open-chain or cyclic alkyl group, a straight-chain or branched alkenyl group, an open-chain or cyclic alkenyl group, a straight-chain or branched alkynyl group, or an open-chain or cyclic alkynyl group, and Ar and Ar' denote an aryl group.

Among such linking groups, a (monocyclic, heterocyclic) arylene having 6 to 20 carbon atoms, -C(=O)NR-, -C(=O)NAr-, -O- (alkyleneoxy, polyalkyleneoxy), -OAr- (aryleneoxy, polyaryleneoxy), -C(=O)O-, -C(=O)O-Ar-, -C(=O)-, -C(=O)Ar-, -S-, -SAr-, -ArS-, -ArC(=O)-, -ArC(=O)O-, -ArC(=O)O-, - ArO-, -ArNR-, etc. are preferable, and a (monocyclic, heterocyclic) arylene having 6 to 20 carbon atoms, -C(=O)NR-, -C(=O)NAr-, -O- (alkyleneoxy, polyalkyleneoxy), -OAr- (aryleneoxy, polyaryleneoxy), -C(=O)O-, -C(=O)O-Ar-, -SAr-, -ArS-, -ArC(=O)-, -ArC(=O)O-, -ArC(=O)O-, -ArO-, -ArNR-, etc. are more preferable.

Furthermore, in the present invention, the linking group denoted by W above may be one formed by combining two or more types of the linking groups cited here.

Specific examples of the divalent substituent denoted by W above that are particularly preferable from the viewpoint of segregation on the ink surface are listed below, but the present invention should not be construed as being limited thereto.

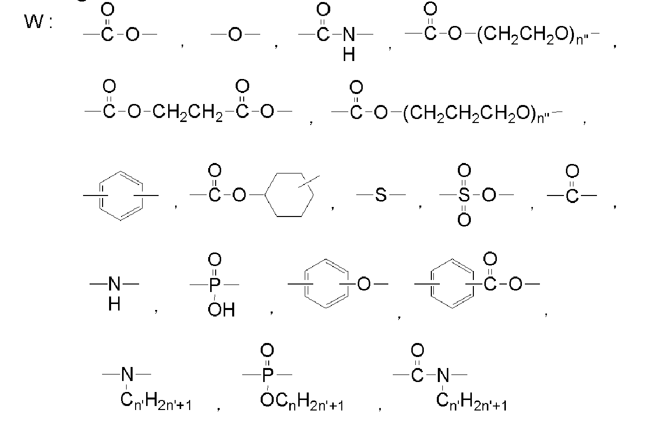

### (n' =1∼40, n''=1∼20)

Furthermore, as Z¹, in addition to a mode in which a long chain alkyl group is bonded via the linking group W, the groups cited below are also preferable. Here, by setting m so that it is at least 6 but no greater than 20, a long chain alkyl group can be contained in such a mode.

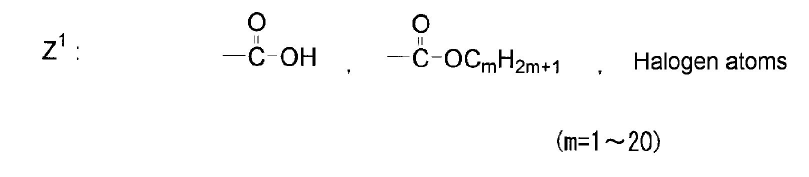

The content of the constituent unit containing the alkyl group having 6 or more carbon atoms in the specific polymerizable polymer (f1) is, from the viewpoint of segregation, 1 wt % to 50 wt %, more preferably 2 wt % to 40 wt %, and most preferably 3 wt % to 30 wt %.

The partial structure constituting the specific polymerizable polymer (f1) may contain another constituent unit in order to adjust compatibility with an ink and polymer Tg as long as the effects of the present invention are not impaired. Examples of the other constituent unit include those below. There is a both molecular termini diol-type alkylene oxide such as ethylene glycol or propylene glycol, a tertiary amine group-containing diol, and an ethylene oxide-modified polycaprolactam; the content of such other constituent unit in the specific polymerizable polymer is preferably 0 to 50 wt %, more preferably 0 to 40 wt %, and most preferably 0 to 30 wt %.

Preferred specific examples [compound examples (A-1) to (A-12)] of the specific polymerizable polymer (f1) in the present invention are cited below together with the weight-average molecular weight, but the present invention should not be construed as being limited to these specific examples. Copolymerization ratio is expressed as mole %.

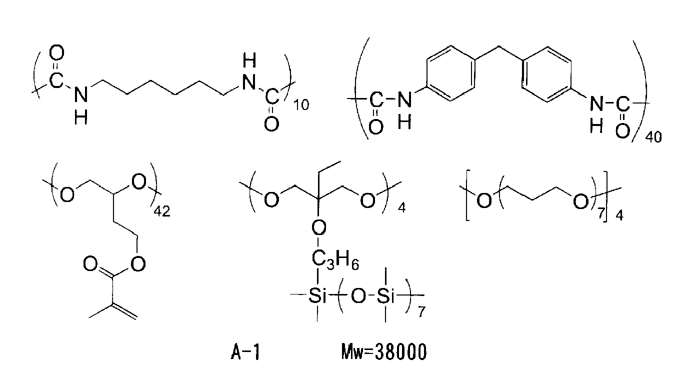

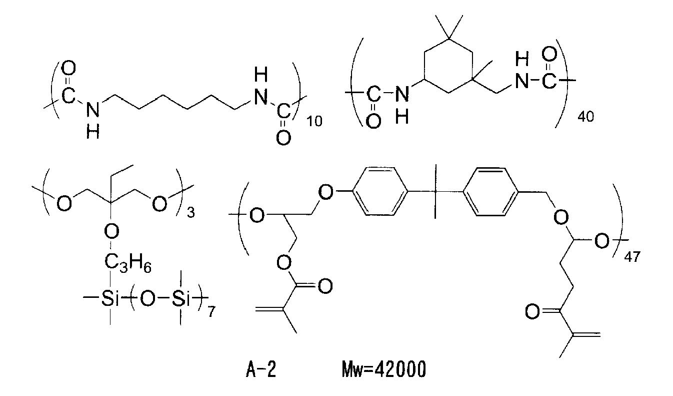

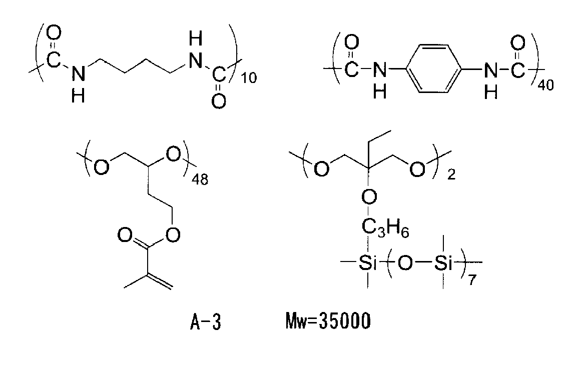

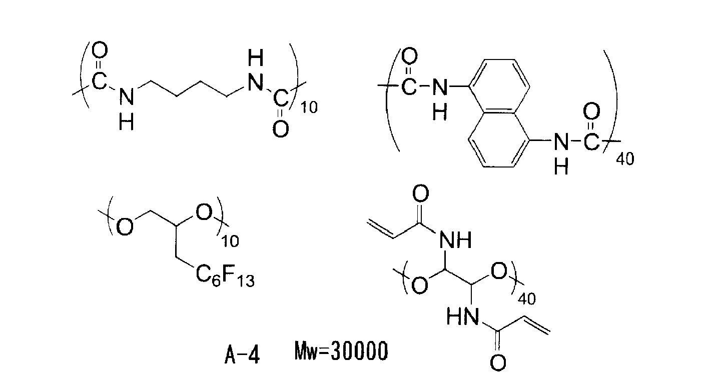

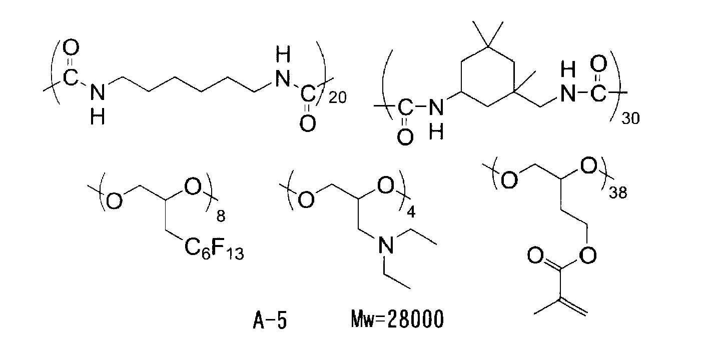

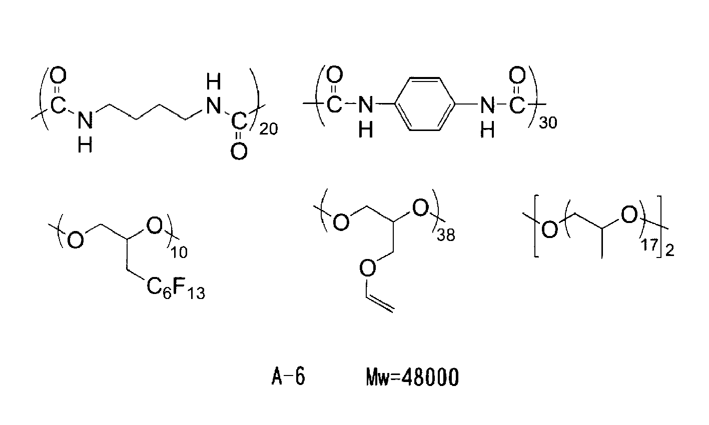

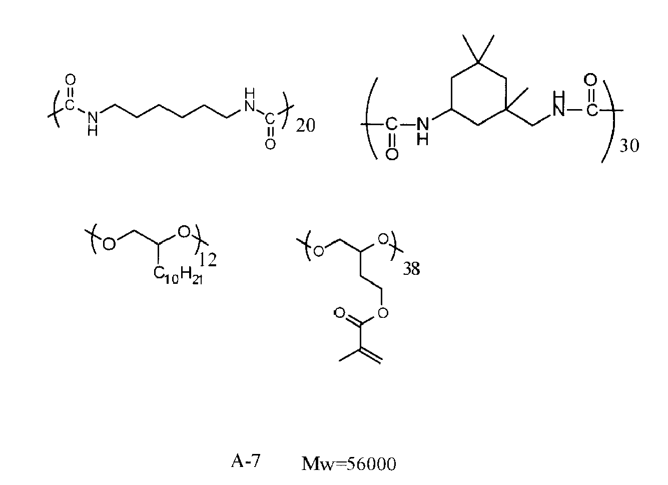

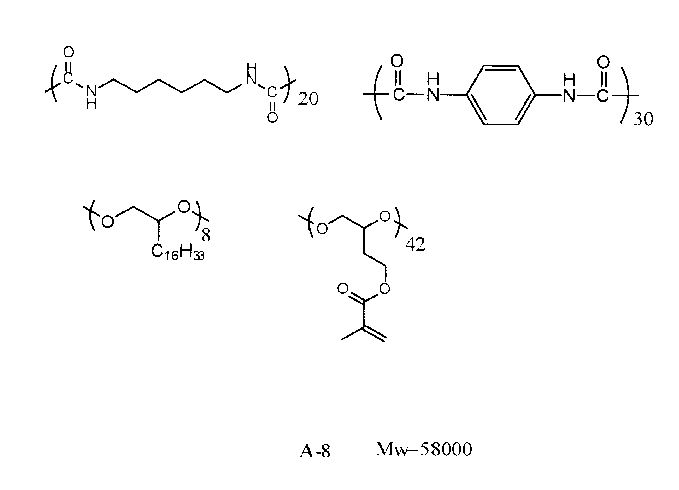

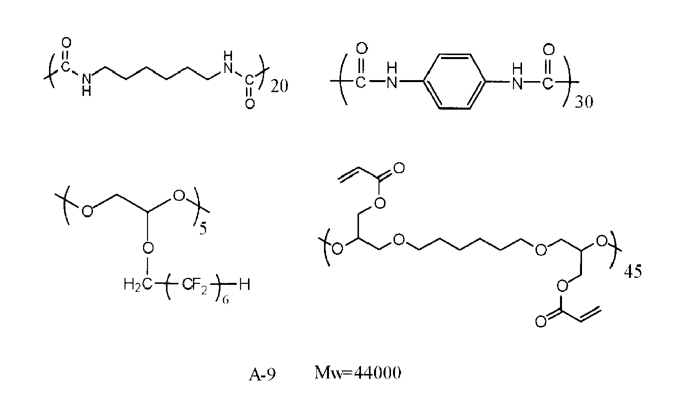

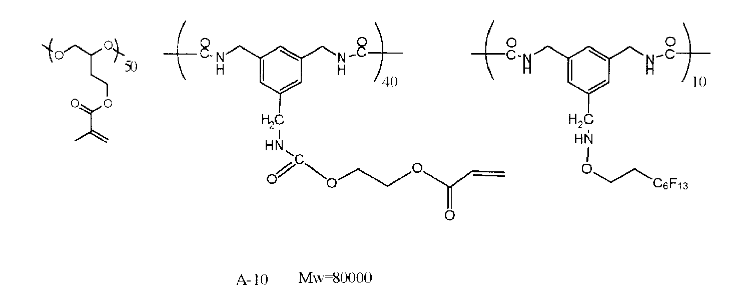

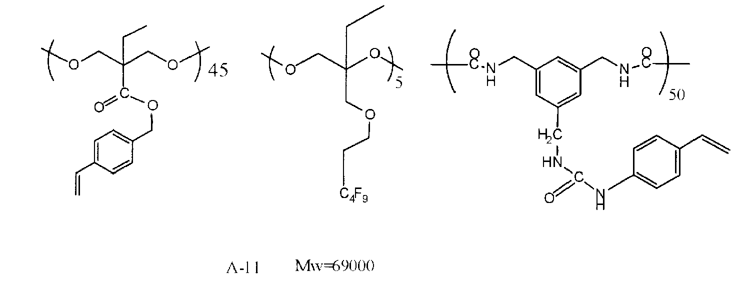

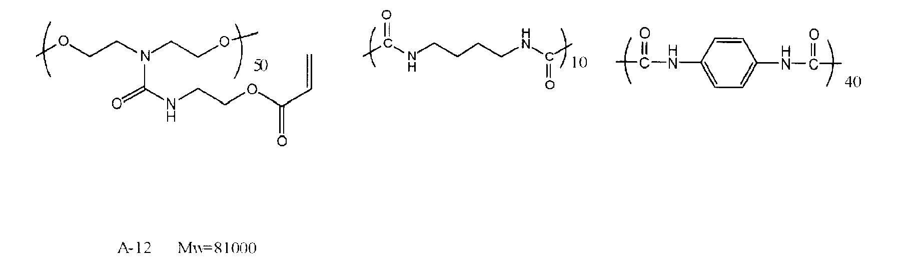

Among them, from the viewpoint of image quality and discharge stability, (A-1), (A-2), (A-4), etc. are preferable.

The specific polymerizable polymer (f1) may be synthesized in a single stage in accordance with, for example, a method described in JP-A-2005-250438 using a diol component having a segregation portion.

When the specific polymerizable polymer (f1) is synthesized in this way, an ethylenically unsaturated group or a segregation portion may be introduced after synthesis of a polymer, but a urethane compound, which is a single stage reaction specific polymer, may be obtained by using an ethylenically unsaturated group- and segregation portion-containing diol or an ethylenically unsaturated group- and segregation portion-containing diisocyanate as a starting material. When the latter method is employed, the ethylenically unsaturated group and the segregation portion may be introduced into either a diol or a diisocyanate or may be introduced into both thereof. Furthermore, for the purpose of controlling the molecular weight of the specific polymerizable polymer (f1), a polyfunctional diol and a polyfunctional isocyanate compound may be used in combination as starting materials in small amounts as long as the polymer does not gel.

The ink composition of the present invention may contain only one type of the specific polymerizable polymer (f1) or may use two or more types thereof in combination.

The content of the specific polymerizable polymer (f1) contained in the ink composition of the present invention is preferably greater than 0 wt % but no greater than 3 wt % in the ink composition total solids content, and more preferably greater than 0.1 wt % but no greater than 1.0 wt %.

It is preferable for the content to be in the above-mentioned range since a sufficient blocking suppression effect is obtained, an ink image is flexible, and when it is applied to inkjet recording, discharge properties tend not to be impaired.

In addition, a surfactant having no ethylenically unsaturated group may be used in combination. Examples of the surfactant that can be used in combination include those described in JP-A-62-173463 and JP-A-62-183457. For example, there are anionic surfactants such as a dialkylsulfosuccinate salt, an alkylnaphthalenesulfonate salt, and a fatty acid salt, nonionic surfactants such as a polyoxyethylene alkyl ether, a polyoxyethylene alkyl allyl ether, an acetylene glycol, and a polyoxyethylene/polyoxypropylene block copolymer, and cationic surfactants such as an alkylamine salt and a quaternary ammonium salt.

### (Other components)

The ink composition of the present invention may comprise as necessary, in addition to the above-mentioned components, a co-sensitizer, a UV absorber, an antioxidant, an antifading agent, a conductive salt, a solvent, a polymer compound, a basic compound, etc. They are described in JP-A-2009-185186 and may be used in the present invention as well.

The ink composition of the present invention preferably comprises a dispersant. Especially when the pigment is used, the ink composition of the present invention preferably comprises a dispersant in order to stably disperse the pigment in the ink composition. As the dispersant, a polymeric dispersant is preferable. The 'polymeric dispersant' referred to in the present invention means a dispersant having a weight-average molecular weight of 1,000 or greater.

The content of the dispersant in the ink composition of the present invention is appropriately selected according to the intended purpose, and is generally preferably 0.05 to 15 wt % relative to the weight of the entire ink composition.

### (Properties of ink composition)

The ink composition of the present invention, has a viscosity at 25°C of preferably no more than 40 mPa·s, more preferably 5 to 40 mPa·s, and yet more preferably 7 to 30 mPa·s. Furthermore, the viscosity of the ink composition at the discharge temperature (preferably 25°C to 80°C, and more preferably 25°C to 50°C) is preferably 3 to 15 mPa·s, and more preferably 3 to 13 mPa·s. With regard to the ink composition of the present invention, it is preferable that its component ratio is appropriately adjusted so that the viscosity is in the above-mentioned range. When the viscosity at room temperature is set to be high, even when a porous recording medium is used, penetration of the ink composition into the recording medium can be prevented, and uncured monomer can be reduced. Furthermore, ink spreading when droplets of ink composition have landed can be suppressed, and as a result there is the advantage that the image quality is improved.

The surface tension of the ink composition of the present invention at 25°C is preferably 20 to 35 mN/m, and more preferably 23 to 33 mN/m. When recording is carried out on various types of recording medium such as polyolefin, PET, coated paper, and uncoated paper, from the viewpoint of spread and penetration, it is preferably at least 20 mN/m, and from the viewpoint of wettability it is preferably not more than 35 mN/m.

### (Inkjet recording method, inkjet recording device, and printed material)

The ink composition of the present invention is suitably used for inkjet recording.

The inkjet recording method of the present invention is a method for forming an image by discharging the ink composition of the present invention onto a recording medium (support, recording material, etc.) for inkjet recording and curing the ink by irradiating the ink composition so discharged onto the recording medium with actinic radiation.

More particularly, the inkjet recording method of the present invention comprises (a¹) a step of discharging the ink composition of the present invention onto a recording medium and (b¹) a step of curing the ink composition by irradiating the ink composition so discharged with actinic radiation,

The inkjet recording method of the present invention comprises the steps (a¹) and (b¹) above and thus forms an image from the ink composition cured on the recording medium.

The printed material of the present invention is a printed material recorded by the inkjet recording method of the present invention.

The amount of a drop of the discharged ink composition in the image forming step is preferably 3 to 42 pL.

In the step (a¹) in the inkjet recording method of the present invention, an inkjet recording device described in detail below may be used.

A recording medium that can be used in the present invention is not particularly limited, but in the case of molding a printed material, a support made from synthetic resin described below may be used.

Examples of the synthetic resin support include polyolefin-based resins such as polyethylene, polypropylene, polymethylpentene, polybutene, and an olefin-based thermoplastic elastomer, polyester resins such as polyethylene terephthalate, polybutylene terephthalate, polyethylene naphthalate, a terephthalic acid-isophthalic acid-ethylene glycol copolymer, a terephthalic acid-ethylene glycol-1,4-cyclohexanedimethanol copolymer, and a polyester-based thermoplastic elastomer, polyamide resins such as nylon-6, nylon-9, and nylon-66, fluorine-based resins such as polyvinyl fluoride, polyvinylidene fluoride, polyvinylidene trifluoride, an ethylene-ethylene tetrafluoride copolymer, and polyethylene tetrafluoride, an acrylic-based resin, polyvinyl chloride, polystyrene, and a polycarbonate resin.

With regard to the acrylic-based resin, for example, a resin such as polymethyl (meth)acrylate, polyethyl (meth)acrylate, polybutyl (meth)acrylate, a methyl (meth)acrylate-butyl (meth)acrylate copolymer, an ethyl (meth)acrylate-butyl (meth)acrylate copolymer, or a methyl (meth)acrylatestyrene copolymer (the term (meth)acrylate means acrylate or methacrylate) may be used singly or in a combination of two or more types.

In particular, from the viewpoint of molding being easy and various resistance properties of a finished formed printed material being excellent, it is preferable to use polyethylene terephthalate, polyethylene naphthalate, polyvinyl chloride, polycarbonate resin, or a resin sheet formed by blending a polycarbonate resin with another resin, and polycarbonate resin is more preferable.

The thickness of a thermoplastic resin sheet used as the support in the present invention (the total thickness in the case of a laminate structure) is not particularly limited as long as it is a resin sheet having a thickness in a range that allows vacuum and pressure forming employing the principles of embossing, vacuum forming, pressure forming, and vacuum/pressure forming to be carried out, and it is preferably 50 to 1,000 µm, more preferably 70 to 800 µm, and yet more preferably 100 to 500 µm.

It is appropriately selected from thermoplastic resin sheets while taking into consideration suitability for embossing in terms of giving a high gloss region, a low gloss region, and a variation in sheet thickness and, moreover, a balance between molding suitability and embossing durability (preventing disappearance of embossing) due to heat during molding when a printed material is thermally softened and formed by vacuum forming, etc. The layer structure of a transparent resin substrate sheet may be a single layer or a laminate in which two or more layers of different types of resin are laminated.

It is possible to add an appropriate additive to the thermoplastic resin sheets as necessary. As the additive, various types of additive may be added in an appropriate amount such that they do not impair surface gloss or thermal behavior such as melting point. Examples thereof include a photostabilizer such as a benzotriazole-based, benzophenone-based, etc. UV absorber or a hindered amine-based radical scavenger, a lubricant such as a silicone resin or a wax, a colorant, a plasticizer, a heat stabilizer, an antimicrobial agent, an anti-mold agent, and an antistatic agent.

The process for producing a molded printed material of the present invention comprises (a²) an image formation step of forming an image above a recording medium by discharging the ink composition of the present invention by an inkjet method, (b²) a curing step of curing the ink composition by irradiating the obtained image with actinic radiation to thus obtain a printed material having a cured image above the recording medium, and (c²) a molding step of molding the printed material.

The formed printed material of the present invention may be produced by molding the thermoplastic resin sheet having ink image cured by photocuring on it, and an image is formed on the support by the inkjet method prior to molding. An image is generally formed on the reverse side of a transparent sheet (side facing the mold in vacuum molding), but an image may also be formed on the opposite side. It is also possible to form an image only on said opposite side depending on the circumstances, and in this case the thermoplastic resin sheet used as a substrate is not necessarily transparent.

An inkjet recording device used in the inkjet recording method of the present invention is not particularly limited, and any known inkjet recording device that can achieve an intended resolution may be used. That is, any known inkjet recording device, such as a commercial product, may be used in order to discharge an ink onto a recording medium (support) in step (a¹) of the inkjet recording method of the present invention.

The inkjet recording device that can be used in the present invention is equipped with, for example, an ink supply system, a temperature sensor, and an actinic radiation source.

The ink supply comprises, for example, a main tank containing the ink composition of the present invention, a supply pipe, an ink composition supply tank immediately before an inkjet head, a filter, and a piezo system inkjet head. The piezo system inkjet head may be driven so as to discharge a multisize dot of preferably 1 to 100 pL, more preferably 3 to 42 pL, and yet more preferably 8 to 30 pL, at a resolution of preferably 320 x 320 to 4,000 x 4,000dpi, more preferably 400 x 400 to 1,600 x 1,600dpi, and yet more preferably 720 x 720 dpi. Here, dpi referred to in the present invention means the number of dots per 2.54 cm.

As described above, with respect to the radiation curing ink composition such as the ink composition of the present invention, since it is desirable for the ink composition to be discharged at a constant temperature, a section from the ink composition supply tank to the inkjet head is thermally insulated and heated. A method of controlling temperature is not particularly limited, but it is preferable to provide, for example, temperature sensors at a plurality of pipe section positions, and control heating according to the ink composition flow rate and the temperature of the surroundings. The temperature sensors may be provided on the ink composition supply tank and in the vicinity of the inkjet head nozzle. Furthermore, the head unit that is to be heated is preferably thermally shielded or insulated so that the device main body is not influenced by the temperature of the outside air. In order to reduce the printer start-up time required for heating, or in order to reduce the thermal energy loss, it is preferable to thermally insulate the head unit from other sections and also to reduce the heat capacity of the entire heated unit.

When the ink composition or the inkjet recording ink composition of the present invention is discharged using the above mentioned inkjet recording device, the ink composition is preferably discharged after being heated to preferably 25°C to 80°C, and more preferably 25°C to 50°C, so as to reduce the viscosity of the ink composition to preferably 3 to 15 mPa·s, and more preferably 3 to 13 mPa·s. In particular, it is preferable to use the ink composition having an ink viscosity at 25°C of no more than 50 mPa·s since a good discharge stability can be obtained. By employing this method, high discharge stability can be realized.

The radiation curing type ink composition such as the ink composition of the present invention generally has a viscosity that is higher than that of a normal ink composition or a water-based ink composition used for an inkjet recording ink composition, and variation in viscosity due to a change in temperature at the time of discharge is large. Viscosity variation in the ink composition has a large effect on changes in liquid droplet size and changes in liquid droplet discharge speed and, consequently, causes the image quality to be degraded. It is therefore necessary to maintain the ink composition discharge temperature as constant as possible. In the present invention, the control range for the temperature of ink composition is preferably ±5°C of a set temperature, more preferably ±2°C of the set temperature, and yet more preferably ±1°C of the set temperature.

The curing step (b²) of irradiating the image thus obtained with actinic radiation so as to cure the inkjet ink composition and obtain a printed material having the image cured on the support are explained.

The ink composition discharged onto the recording medium cures upon exposure to actinic radiation. This is due to a initiating species such as a radical being generated by decomposition of the photopolymerization initiator contained in the ink composition of the present invention by irradiation with actinic radiation, the initiating species functioning so as to make a polymerization reaction of a radically polymerizable compound take place and to promote it. In this process, if a sensitizer is present together with the polymerization initiator in the ink composition, the sensitizer in the system absorbs actinic radiation, becomes excited, and promotes decomposition of the polymerization initiator by contact with the polymerization initiator, thus enabling a curing reaction with higher sensitivity to be achieved.

The actinic radiation used in this process may include rays, rays, an electron beam, X rays, UV rays, visible light, and IR rays. Although it depends on the absorption characteristics of the sensitizing dye, the peak wavelength of the actinic radiation is, for example, 200 to 600 nm, preferably 300 to 450 nm, and more preferably 350 to 420 nm.

Furthermore, in the present invention, the photopolymerization initiation system has sufficient sensitivity for low output actinic radiation. The actinic radiation is applied therefore so that the illumination intensity on the exposed surface is, for example, 10 to 4,000 mW/cm², and preferably 20 to 2,500 mW/cm².

As an actinic radiation source, a mercury lamp, a gas/solid laser, etc. are mainly used, and for UV photocuring inkjet ink a mercury lamp and a metal halide lamp are widely known. However, from the viewpoint of protection of the environment, there has recently been a strong desire for mercury not to be used, and replacement by a GaN semiconductor UV light emitting device is very useful from industrial and environmental viewpoints. Furthermore, LEDs (UV-LED) and LDs (UV-LD) have small dimensions, long life, high efficiency, and low cost, and their use as a photocuring inkjet light source can be expected.

Furthermore, light-emitting diodes (LED) and laser diodes (LD) may be used as the source of actinic radiation. In particular, when a UV ray source is needed, a UV-LED or a UV-LD may be used. For example, Nichia Corporation has marketed a violet LED having a wavelength of the main emission spectrum of between 365 nm and 420 nm. Furthermore, when a shorter wavelength is needed, the example of the LED includes a LED, disclosed in US Pat. No. 6,084,250, that can emit actinic radiation whose wavelength is centered between 300 nm and 370 nm. Furthermore, another violet LED is available, and irradiation can be carried out with radiation of a different UV bandwidth. The actinic radiation source preferable in the present invention is a UV-LED, and a UV-LED having a peak wavelength at 350 to 420 nm is particularly preferable.

The maximum illumination intensity of the LED on a recording medium is preferably 10 to 2,000 mW/cm², more preferably 20 to 1,000 mW/cm², and particularly preferably 50 to 800 mJ/cm².

The ink composition of the present invention is desirably exposed to such actinic radiation for preferably 0.01 to 120 sec., more preferably 0.01 to 90 sec., and yet more preferably 0.01 to 10 sec.

And in the present invention, it is desirable for the ink composition to be cured by irradiated for 0.01 to 10 sec. with actinic radiation and with no greater than 2,000 mW/cm2 of illumination intensity after discharging the ink composition.

Irradiation conditions and a basic method for irradiation with actinic radiation are disclosed in JP-A-60-132767. Specifically, a light source is provided on either side of a head unit that includes an ink composition discharge device, and the head unit and the light source are made to scan by a so-called shuttle system. Irradiation with actinic radiation is carried out after a certain time (e.g. 0.01 to 0.5 sec., preferably 0.01 to 0.3 sec., and more preferably 0.01 to 0.15 sec.) has elapsed from when the ink composition has landed. By controlling the time from ink composition landing to irradiation so as to be a minimum in this way, it becomes possible to prevent the ink composition that has landed on a recording medium from spreading before being cured. Furthermore, since the ink composition can be exposed before it reaches a deep area of a porous recording medium that the light source cannot reach, it is possible to prevent monomer from remaining unreacted.

Furthermore, curing may be completed using another light source that is not driven. WO99/54415 discloses, as an irradiation method, a method employing an optical fiber and a method in which a collimated light source is incident on a mirror surface provided on a head unit side face, and a recorded area is irradiated with UV light.

By employing such a inkjet recording method as described above, it is possible to maintain a uniform dot diameter for landed ink composition even for various types of recording medium (support) having different surface wettability, thereby improving the image quality. In order to obtain a color image, it is preferable to superimpose colors in order from those with a high lightness. By superimposing ink compositions in order from one with high lightness, it is easy for radiation to reach a lower ink composition, the curing sensitivity is good, the amount of residual monomer decreases, and an improvement in adhesion can be expected. Furthermore, although it is possible to discharge all colors and then expose them at the same time, it is preferable to expose one color at a time from the viewpoint of promoting curing.

In this way the ink composition of the present invention may be cured by irradiation with actinic radiation in high sensitivity and form an image on the surface of the recording medium.

The inkjet recording method of the present invention may suitably employ the ink set comprising at least one ink composition of the present invention. The order in which colored ink compositions are discharged is not particularly limited, but it is preferable to apply to a recording medium from a colored ink composition having a low lightness; when the ink compositions of yellow, cyan, magenta, and black are used, they are preferably applied on top of the recording medium in the order yellow → cyan → magenta → black. Furthermore, when white is additionally used, they are preferably applied on top of the recording medium in the order white → yellow → cyan → magenta → black. Moreover, the present invention is not limited thereto, and an ink set comprising a total of seven colors, that is, light cyan, light magenta ink compositions and cyan, magenta, black, white, and yellow dark ink compositions may preferably be used, and in this case they are applied on top of the recording medium in the order white → light cyan → light magenta → yellow → cyan → magenta → black.

In this way, the ink composition of the present invention may be cured by irradiation with actinic radiation in high sensitivity and form an image on the surface of the recording medium.

When using as an ink set comprising plurality of ink compositions having a different color, the ink set is not particularly limited as long as it is an ink set having two or more types of ink compositions in combination, the ink set comprising in combination at least one ink composition of the present invention and another ink composition of the present invention or an ink composition other than one of the present invention, and it is preferable for the ink set to comprise at least one ink composition of the present invention having a color selected from cyan, magenta, yellow, black, white, light magenta, and light cyan.

Furthermore, the ink set of the present invention may be suitably used in the inkjet recording method of the present invention.

In order to obtain a full color image using the ink composition of the present invention, it is preferable to use, as the ink set of the present invention, an ink set comprising at least four dark ink compositions of yellow, cyan, magenta, and black, it is more preferable to use an ink set comprising in combination five dark ink compositions of yellow, cyan, magenta, black, and white and at least one ink composition of the present invention, and it is yet more preferable to use an ink set comprising in combination five dark ink compositions of yellow, cyan, magenta, black, and white and two, that is, light cyan, and light magenta ink compositions.

The 'dark ink composition' referred to in the present invention means an ink composition for which the content of the colorant exceeds 1 wt % of the entire ink composition. The colorant is not particularly limited; a known colorant may be used, and examples thereof include a pigment and a disperse dye.

The ink set of the present invention may comprise at least one dark ink composition and at least one light ink composition. The dark ink composition and the light ink composition employ colorants of similar colors, the ratio of the colorant concentration of the dark ink composition to the colorant concentration of the light ink composition is preferably dark ink composition:light ink composition = 15:1 to 4:1, more preferably 12:1 to 4:1, and yet more preferably10:1 to 4.5:1. When the ratio is in the above-mentioned range, a vivid full color image with little feeling of grain can be obtained.

### <Molded printed material and production process therefor>

A printed material formed using the ink composition of the present invention is suitable for molding such as embossing, vacuum forming, pressure forming, or vacuum/pressure forming.

The molded printed material of the present invention is a molded printed material formed by molding a printed material formed using the ink composition of the present invention, and is preferably a molded printed material formed by molding a printed material formed by the inkjet recording method of the present invention.

Furthermore, the process for producing a molded printed material referred to in the present invention preferably comprises (a²) an image formation step of forming an image above a recording medium by discharging the ink composition of the present invention by an inkjet method, (b²) a curing step of curing the ink composition by irradiating the obtained image with actinic radiation to thus obtain a printed material having a cured image above the recording medium, and (c²) a molding step of molding the printed material.

Step (a²) and step (b²) above may be carried out in the same manner as for step (a¹) and step (b¹) described above.

Furthermore, as a support that can be used in the process for producing a molded printed material of the present invention, a support that is suitable for the above-mentioned molding may preferably be used.

With regard to molding in the above-mentioned molding step, vacuum forming, pressure forming, vacuum/pressure forming, and embossing are preferable, vacuum forming, pressure forming, and vacuum/pressure forming are more preferable, and vacuum forming is yet more preferable.

As a system for molding a printed material, a known system may be used, and the system may be integral with the inkjet recording system or separate therefrom.

### <Vacuum forming, pressure forming, vacuum/pressure forming>

Vacuum forming is a method in which a support having an image formed thereon is preheated to a temperature at which it can be thermally deformed, and molding is carried out by pressing it against a mold and cooling while sucking it toward the mold by means of vacuum and stretching it.

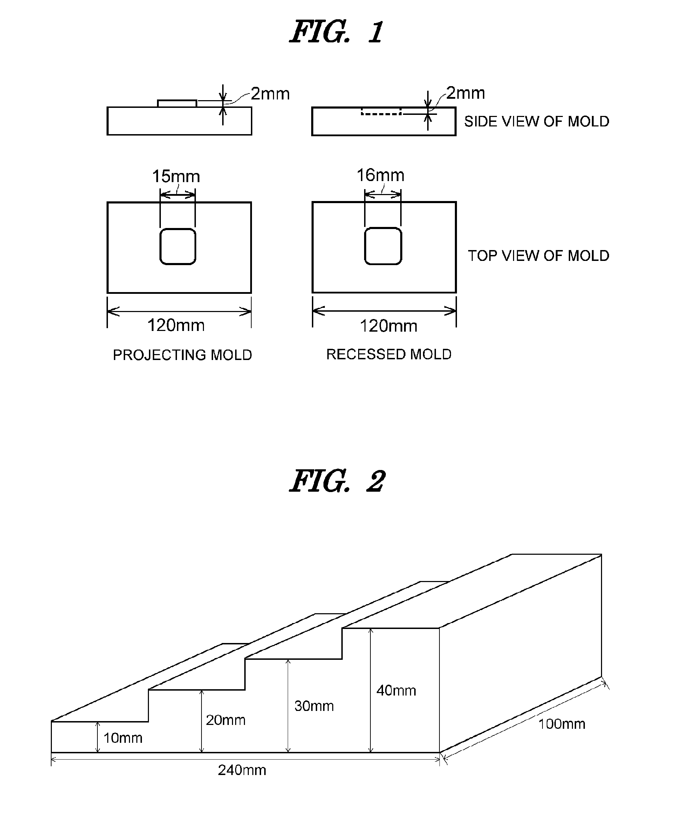

In a test for vacuum forming, a convex mold and a concave mold shown in FIG. 1 are used in combination, or in a test for vacuum forming, a convex mold shown in FIG. 2 and a corresponding concave mold are used in combination.

Pressure molding is a method in which a support having an image formed thereon is preheated to a temperature at which it can be thermally deformed, and molding is carried out by pressing it against a mold by applying pressure from the side opposite to the mold and cooling. Vacuum/pressure molding is a method in which molding is carried out by applying a vacuum and pressure at the same time.

In detail, the 'Thermal Molding' section described on p.766 to 768 of 'Kobunshi Daijiten' (Polymer Dictionary) (Maruzen) and publications cited in the section may be referred to. The processing temperature is appropriately selected depending on the type of the support, and it is preferable to carry out molding when the support temperature is 60°C to 180°C, more preferably 80°C to 160°C, and yet more preferably 80°C to 150°C. In the above-mentioned range, it is possible to carry out processing in which there is little change in the color of the image and release from a mold is excellent.

### Embossing

Embossing is a process in which a three-dimensional feel is given by indenting a printed material, etc. in a desired shape such as a pattern or a letter, and may be carried out using a roller, a press, etc.

Examples of embossing include a hot/cold pressing method, and a method described in JP-A-10-199360, etc. may be referred to.

One example of an embossing system employing the hot/cold pressing method is shown below.

In the embossing system, a lower platen and an upper platen are disposed so that they can move toward and away from each other. A plate-shaped heater is fixed on top of the lower platen, and a plate-shaped heater is also fixed to a lower face of the upper platen. This enables a support to be hot pressed while it is heated. In this hot pressing machine, the plate-shaped heater on the lower platen is equipped with a mold having a projection following a predetermined embossing shape, and a mold having a recess that conforms to the shape of the projection is mounted so as to be in contact with the heater fixed to the lower face of the upper platen. A support having an image formed thereon is positioned, a cushion sheet is placed between the support and the mold with the recess, and the support and the cushion sheet are pressed between the upper platen and the lower platen by lowering the upper platen, etc. A pressure applied in this hot pressing step is, for example, 30 tons, and the heating temperature from the plate-shaped heater is, for example, 170°C. The upper platen is pressed against the lower platen, the support and the cushion sheet are sandwiched between the molds, and this hot pressing is maintained for about 3 minutes. The support is heated by the heaters via the molds, and a plurality of projections are formed due to thermal deformation. Subsequently, the support and the cushion sheet sandwiched between the molds are subjected to cold pressing by placing them between internally water-cooled platens without heaters and applying a pressure of, for example, 30 tones by pressing the platens for about 3 minutes. This enables an embossed formed printed material to be obtained in which the support has a projecting shape due to thermal deformation by the hot pressing. The pressure applied and the heating temperature may be adjusted appropriately according to the material of the printed material and conditions such as the shape that is to be formed, etc.

When the printed material formed using the ink composition of the present invention is embossed, it is preferable to carry out embossing at 20°C to 150°C, more preferably 20°C to 100°C, and particularly preferably 25°C to 60°C. In the above-mentioned range, it is possible to carry out processing in which there is little change in the color of the image and release from a mold is excellent.

### EXAMPLES

The present invention is specifically explained below by reference to Examples, but the present invention should not be construed as being limited to these Examples. 'Parts' and '%' are on a weight basis unless otherwise specified.

### (Materials)

Materials used in Examples and Comparative Examples were as follows.

### <(Component a) Open-chain and/or cyclic ether bond-containing monofunctional (meth)acrylate>

SR256 manufactured by Sartomer (2-(2-ethoxyethoxy)ethyl acrylate, EOEOEA), SR285 manufactured by Sartomer (tetrahydrofurfuryl acrylate, THFA), and SR339 manufactured by Sartomer (2-phenoxyethyl acrylate) were used.

Other than the above, OXE-10 ((3-ethyl-3-oxetan-3-yl)methyl acrylate), MEDOL (4-acryloyloxymethyl-2-methyl-2-ethyl-1,3-dioxolane), CHDOL-10 (Osaka Organic Chemical Industry Ltd.), 2-MTA (2-methoxyethyl acrylate) (Osaka Organic Chemical Industry Ltd.), Viscoat #158 (3-methoxybutyl acrylate) (Osaka Organic Chemical Industry Ltd.), Light-Acrylate BO-A (butoxyethyl acrylate) (Kyoeisha Chemical Co., Ltd.), and New Frontier CEA (EO-modified cresol acrylate) (Dai-Ichi Kogyo Seiyaku Co., Ltd.) were used.

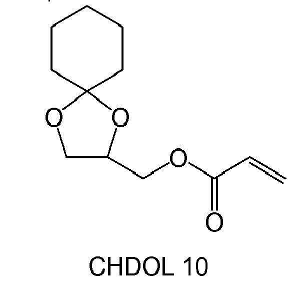

### <(Component b) Polycyclic aliphatic group-containing monofunctional (meth)acrylate)>

SR505 (isobornyl acrylate) (manufactured by Sartomer ), FA-512AS ( dicyclopentenyloxyethyl acrylate, Hitachi Chemical Co., Ltd.), FA-512AS ( dicyclopentenyloxyethyl acrylate, Hitachi Chemical Co., Ltd.), and FA-511AS ( dicyclopentenyl acrylate, Hitachi Chemical Co., Ltd.) were used.

Other than the above, as a monofunctional monomer NVC (product name V-CAP: N-vinyl-2-caprolactam) (manufactured by ISP JAPAN) was used.

### <(Component e) Polyfunctional (meth)acrylate>

SR508 (dipropylene glycol diacrylate, DPGDA), SR351 S (trimethylolpropane triacrylate, TMPTA), SR212 (1,3-butylene glycol diacrylate, 1,3-EGDA), and SR213 (1,4-butylene glycol diacrylate, 1,4-BGDA) (all manufactured by Sartomer ) were used.

### <(Component c) Polymerization initiator>

### Benzophenone (BPh)

IRGACURE 184 (184, 1-hydroxycyclohexyl phenyl ketone, Ciba Specialty Chemicals)
IRGACURE 819 (819, bis(2,4,6-trimethylbenzoyl)phenylphosphine oxide, Ciba Specialty Chemicals)
Lucirin TPO (TPO, diphenyl(2,4,6-trimethoxybenzoyl)phosphine oxide, BASF) FIRSTCURE ITX (ITX, isopropylthioxanthone, Chem First)

### <(Component d) Pigment and dispersant>

NOVOPERM YELLOW H2G (yellow pigment, Clariant)
NOVOPERM YELLOW 4G01 (yellow pigment, Clariant)
NOVOPERM YELLOW P-HG (yellow pigment, Clariant)
CINQUASIA MAGENTA RT-335 D (magenta pigment, Ciba Specialty Chemicals)
IRGALITE BLUE GLVO (cyan pigment, Ciba Specialty Chemicals)
SPECIAL BLACK 250 (black pigment, C.I. Pigment Black 7, Ciba Specialty Chemicals)
DISPERBYK-168 (pigment dispersing agent, BYK Chemie)
DISPERBYK-2001 (pigment dispersing agent, BYK Chemie)
AJISPER PB822 (pigment dispersing agent, Ajinomoto-Fine-Techno Co., Inc.)
SOLSPERSE 5000 (pigment dispersing agent, Lubrizol)
SOLSPERSE 22000 (pigment dispersing agent, Lubrizol)
SOLSPERSE 32000 (pigment dispersing agent, Lubrizol)

### <Polymerization inhibitor>

FIRSTCURE ST-1 (polymerization inhibitor, Chem First)
MEHQ (hydroquinone monomethyl ether, Tokyo Chemical Industry Co., Ltd.)

### <Component f>

BYK307: polyether-modified polydimethylsiloxane (BYK-Chemie)
A-1, A-2, A-4: polymers shown above

### (Preparation of mill base)

Cyan, yellow, magenta, and white mill bases having the compositions below were prepared by mixing and stirring using a mixer (L4R, Silverson) at 2,500 rotations/minute for 10 minutes. Subsequently, the mixtures were placed in a DISPERMAT LS bead mill disperser (VMA) and dispersed using 0.65 mm diameter YTZ balls (Nikkato Corporation) at 2,500 rotations/minute for 6 hours.

BYK-168 was used as a powder by diluting a commercial product in a solution state using acetone and precipitating in a large amount of hexane.

### <Cyan mill base>

| | |
|---|---|
| IRGALITE BLUE GLVO | 30 parts |
| Phenoxyethyl acrylate | 50 parts |
| DISPERBYK-168 | 20 parts |
| <Yellow mill base> | |
| NOVOPERM YELLOW H2G | 30 parts |
| Phenoxyethyl acrylate | 42 parts |
| DISPERBYK-168 | 28 parts |
| <Magenta mill base> | |
| CINQUASIA MAGENTA RT-335 D | 30 parts |
| SOLSPERSE 32000 | 11 parts |
| Phenoxyethyl acrylate | 58 parts |
| FIRSTCURE ST-1 | 1 part |
| <White mill base> | |
| TIPAQUE CR-60-2 | 70 parts |
| Phenoxyethyl acrylate | 25 parts |
| SOLSPERSE 36000 | 5 parts |

### (Example 1)

The ink composition shown in Table 1 of the Examples was stirred using a mixer (L4R, Silverson) at 2,500 rotations/minute for 15 minutes, thus giving cyan ink composition 1. Ink compositions of Examples 2 to 30 below were obtained in the same manner.

**(Table 1)**

| | Polymerizable monomer | | | | | | Polymerization inhibitor | (Component c)/wt % | | | | (Component f) | | Mill base/wt% |
|---|---|---|---|---|---|---|---|---|---|---|---|---|---|---|
| | (Component a) | wt% | (Comp b) | wt% | (Comp e) | wt% | Firstcure ST-1 | 184 | 189 | TPO | ITX | Type | wt% | |
| Ex 1 | S R256 | 39 3 | FA-511AS | 39 0 | SR351S | 1 0 | 01 | 30 | 1 0 | 55 | 1 0 | BYK-307 | 01 | Cyan 10 |
| Ex 2 | S R285 | 39 3 | FA-511AS | 39 0 | SR351S | 1 0 | 01 | 30 | 1 0 | 55 | 1 0 | BYK-307 | 01 | Cyan 10 |
| Ex 3 | OXE-10 | 39 3 | FA-511AS | 39 0 | SR351S | 1 0 | 01 | 30 | 1 0 | 55 | 1 0 | BYK-307 | 01 | Yellow 10 |
| Ex 4 | MEDOL10 | 39 3 | FA-511AS | 39 0 | SR351S | 1 0 | 01 | 30 | 1 0 | 55 | 1 0 | BYK-307 | 01 | Yellow 10 |
| Ex 5 | CHDOL10 | 39 3 | FA-511AS | 39 0 | SR351S | 1 0 | 01 | 30 | 1 0 | 55 | 1 0 | BYK-307 | 01 | Magenta 10 |
| Ex 6 | SR339 | 39 3 | FA-511AS | 39 0 | SR351S | 1 0 | 01 | 30 | 1 0 | 55 | 1 0 | BYK-307 | 01 | Magenta 10 |
| Ex 7 | 2-MTA | 39 3 | FA-511AS | 39 0 | SR351S | 1 0 | 01 | 3 0 | 1 0 | 5 5 | 1 0 | BYK-307 | 0 1 | White 10 |
| Ex 8 | Viscoat #158 | 39 3 | FA-511AS | 39 0 | SR351S | 1 0 | 0 1 | 3 0 | 1 0 | 5 5 | 1 0 | BYK-307 | 0 1 | White 10 |
| Ex 9 | Light-Acrylate BO-A | 39 3 | FA-511AS | 39 0 | SR351S | 1 0 | 0 1 | 3 0 | 1 0 | 5 5 | 1 0 | BYK-307 | 0 1 | White 10 |
| Ex 10 | New Frontier CEA | 39 3 | FA-511AS | 39 0 | SR351S | 1 0 | 0 1 | 3 0 | 1 0 | 5 5 | 1 0 | BYK-307 | 0 1 | Magenta 10 |
| Ex 11 | S R256 | 30 0 | FA-511AS | 48 6 | SR351S | 1 0 | 0 1 | 3 0 | 1 0 | 5 5 | 1 0 | BYK-307 | 0 1 | Magenta 10 |
| Ex 12 | S R285 | 30 0 | FA-511AS | 48 6 | SR351S | 1 0 | 0 1 | 3 0 | 1 0 | 5 5 | 1 0 | BYK-307 | 0 1 | Magenta 10 |
| Ex 13 | OXE-10 | 30 0 | FA-511AS | 48 6 | SR351S | 1 0 | 0 1 | 3 0 | 1 0 | 5 5 | 1 0 | BYK-307 | 0 1 | Magenta 10 |
| Ex 14 | MEDOL10 | 30 0 | FA-511AS | 48 6 | SR351S | 1 0 | 0 1 | 3 0 | 1 0 | 5 5 | 1 0 | BYK-307 | 0 1 | Magenta 10 |
| Ex 15 | CHDOL10 | 30 0 | FA-511AS | 48 6 | SR351S | 1 0 | 0 1 | 3 0 | 1 0 | 5 5 | 1 0 | BYK-307 | 0 1 | Magenta 10 |
| Ex 16 | SR339 | 30 0 | FA-511AS | 48 6 | SR351S | 1 0 | 0 1 | 3 0 | 1 0 | 5 5 | 1 0 | BYK-307 | 0 1 | Magenta 10 |
| Ex 17 | 2-MTA | 30 0 | FA-511AS | 48 6 | SR351S | 1 0 | 0 1 | 3 0 | 1 0 | 5 5 | 1 0 | BYK-307 | 0 1 | Magenta 10 |
| Ex 18 | Viscoat #158 | 30 0 | FA-511AS | 48 6 | SR351S | 1 0 | 0 1 | 3 0 | 1 0 | 5 5 | 1 0 | BYK-307 | 0 1 | Magenta 10 |
| Ex 19 | Light-Acrylate BO-A | 30 0 | FA-511AS | 48 6 | SR351S | 1 0 | 0 1 | 3 0 | 1 0 | 5 5 | 1 0 | BYK-307 | 0 1 | Magenta 10 |
| Ex 20 | New Frontier CEA | 30 0 | FA-511AS | 48 6 | SR351S | 1 0 | 0 1 | 3 0 | 1 0 | 5 5 | 1 0 | BYK-307 | 0 1 | Magenta 10 |
| Ex 21 | S R256 | 48 6 | FA-511AS | 30 0 | SR351S | 1 0 | 0 1 | 3 0 | 1 0 | 5 5 | 1 | BYK-307 | 0 1 | Magenta 10 |
| Ex 22 | S R285 | 48 6 | FA-511AS | 30 0 | SR351S | 1 0 | 0 1 | 3 0 | 1 0 | 5 5 | 1 | BYK-307 | 0 1 | Magenta 10 |
| Ex 23 | OXE-10 | 48 6 | FA-511AS | 30 0 | SR351S | 1 0 | 0 1 | 3 0 | 1 0 | 5 5 | 1 | BYK-307 | 0 1 | Magenta 10 |
| Ex 24 | MEDOL10 | 48 6 | FA-511AS | 30 0 | SR351S | 1 0 | 0 1 | 3 0 | 1 0 | 5 5 | 1 | BYK-307 | 0 1 | Magenta 10 |
| Ex 25 | CHDOL10 | 48 6 | FA-511AS | 30 0 | SR351S | 1 0 | 0 1 | 3 0 | 1 0 | 5 5 | 1 0 | BYK-307 | 0 1 | Magenta 10 |
| Ex 26 | SR339 | 48 6 | FA-511AS | 30 0 | SR351S | 1 0 | 0 1 | 3 0 | 1 0 | 5 5 | 1 | BYK-307 | 0 1 | Magenta 10 |
| Ex 27 | 2-MTA | 48 6 | FA-511AS | 30 0 | SR351S | 1 0 | 0 1 | 3 0 | 1 0 | 5 5 | 1 | BYK-307 | 0 1 | Magenta 10 |
| Ex 28 | Viscoat #158 | 48 6 | FA-511AS | 30 0 | SR351S | 1 0 | 0 1 | 3 0 | 1 0 | 5 5 | 1 0 | BYK-307 | 0 1 | Magenta 10 |
| Ex 29 | Light-Acrylate BO-A | 48 6 | FA-511AS | 30 0 | SR351S | 1 0 | 0 1 | 3 0 | 1 0 | 5 5 | 1 0 | BYK-307 | 0 1 | Magenta 10 |
| Ex 30 | New Frontier CEA | 48 6 | FA-511AS | 30 0 | SR351S | 1 0 | 0 1 | 3 0 | 1 0 | 5 5 | 1 | BYK-307 | 0 1 | Magenta 10 |

### <Evaluation of discharge properties>

Evaluation of discharge properties of an ink composition was carried out by carrying out recording on a recording medium using an experimental inkjet recording system having piezo system inkjet nozzles. The ink supply system comprised a main tank, a supply pipe, an ink supply tank immediately before an inkjet head, and a piezo system inkjet head, and a section from the ink supply tank to the inkjet head was thermally insulated and heated. Temperature sensors were provided on the ink supply tank and in the vicinity of the nozzle of the inkjet head, and the temperature was controlled so that the nozzle section was always at 45°C ± 2°C. The piezo system inkjet head was driven so as to discharge multisize dots of 8 to 30 pL at a resolution of 720 x 720 dpi, and discharge properties were evaluated from the number of nozzles missing in a 1-hour continuous discharge test.
Excellent: number of nozzles missing 0 to 2
Good: number of nozzles missing 3 to 6
Poor: number of nozzles missing 7 or more

### <Evaluation of ink stability>

After the ink composition prepared was stored at 75%RH and 60°C for 3 days, the viscosity of the ink composition at discharge temperature was measured, and an increase in viscosity of the ink composition was expressed as the viscosity ratio of that after storage/that before storage.

The stability over time was better when the viscosity did not change and the ratio was closer to 1.0.

The stability over time of the ink composition was evaluated using the criteria below.
Excellent: the viscosity ratio of that after storage/that before storage was at least 1.0 but less than 1.10
Good: the viscosity ratio of that after storage/that before storage was at least 1.10 but less than 1.20
Fair: the viscosity ratio of that after storage/that before storage was at least 1. 20 but less than 1.30

### <Evaluation of curability>

The surface of polyvinyl chloride (thickness 220 µm) as a recording medium was coated with ink composition 1 using a K hand coater (No. 2 bar) to give a wet film thickness of 12 µm. Subsequently, it was passed repeatedly through a CSOT UV conveyor system (GS Yuasa Lighting) equipped with a MAN125L ozone-free metal halide lamp, set at a conveyor speed of 8.7 m/minute and an exposure intensity of 760 W/cm², until the coated surface lost its tackiness, thus carrying out radiation curing. The cure rate was evaluated using the criteria below. Results are shown in Table 2 below.

The criteria for evaluation of curability were as follows.
Excellent: became tack-free after 3 passes. Cure rate very fast.
Good: became tack-free after 4 to 6 passes. Cure rate fast.
Poor: became tack-free after 7 or more passes. Curing time slow.

### <Evaluation of adhesion>

As a method for evaluation of adhesion to a substrate, a crosshatch test (JIS K 5600-5-6) was carried out. A solid image having an average film thickness of 12 µm for an image area was drawn in accordance with the above-mentioned inkjet image recording method. Subsequently, each printed material was subjected to the crosshatch test. Evaluation was carried out by the three grades of Excellent, Good, and Poor in accordance with JIS K 5600-5-6. When the cut edge was completely smooth and there was no peeling off in any lattice cell, it was evaluated as Excellent.

### <Evaluation of processing suitability >

### (Vacuum forming test and processing suitability test)

A printed material was formed by the same method as the above-mentioned inkjet recording method except that Panlite PC-1151 (film thickness 500 µm, polycarbonate sheet, manufactured by Teijin Chemicals Ltd.) was used as a support, and this printed material was then subjected to vacuum forming using a Forming 300X vacuum forming system (manufactured by Seiko Sangyo Co., Ltd.). A wooden mold shown in FIG. 2 was placed at the center of a vacuum table of the vacuum forming system, after the temperature of the support reached 130°C to 150°C the vacuum table was slowly raised while operating a table raise/lower lever, and vacuum forming was carried out by a desired mold. The molded printed material was visually examined for the occurrence of cracking and pinholes.

Evaluation was carried out using the criteria below.
Excellent: no cracks were formed in edge parts even with a height of 40 mm.
Good: no cracks were formed in edge parts for a height of up to 30 mm, but cracks were formed for 40 mm.
Poor: cracks were formed in edge parts for a height of 30 mm or less.

### <Evaluation of skin irritation>

A test was carried out using 3 rabbits. For one test sample body, four regions having an area of about 6 cm² were set, and two thereof were subjected to #-shaped scratching of a keratinized layer using an 18 gauge syringe so that it did not reach the dermis (scratched skin), and the other two were not treated (unscratched skin). 0.5 mL of a sample was applied to 2 cm x 3 cm gauze patches, and they were affixed to one each of unscratched and scratched skin regions for 4 hours. In this process, the remaining unscratched and scratched skin regions were examined as controls. Subsequently, the gauze patches were removed, the condition of the skin was examined after 1, 24, 48, and 72 hours, and when an irritation reaction was observed after 72 hours, observation was carried out until the irritation disappeared with 14 days after the removal as a limit.

A skin primary irritation index (P.I.I.) was calculated from the examination result, and evaluation was carried out in accordance with ISO 10933 PART 10.

Evaluation points and P.I.I. described in the Examples tables were as follows.
Evaluation: P.I.I.
Excellent: 0 to 2
Good: 2 to 4
Poor: 4 to 8

The evaluation results of Examples 1 to 30 are shown in Table 2.

### (Examples 31 to 60)

Ink compositions of Examples 31 to 60 were prepared in the same manner as in Example 1 except that the material types and proportions added were changed as shown in Table 3. The evaluation results are shown in Table 4.

### (Examples 61 to 90 and Comparative Examples 1 to 5)

Ink compositions of Examples 61 to 90 and Comparative Examples 1 to 5 were prepared in the same manner as in Example 1 except that the material types and proportions added were changed as shown in Table 5. The evaluation results are shown in Table 6.

Furthermore, the ink composition of the present invention can be a colorless ink not containing a colorant.

That is, it can be used as a colorless ink composition containing none of the yellow (Y), magenta (M), or cyan (C) mill base.

Moreover, in addition to YMC, which are the three primary colors of the subtractive color method, the colorant may employ a white ink or a black ink. The color reproduction range may be enlarged by combined use of a so-called spot color ink such as green, orange, or violet.

**(Table 2)**

| | Evaluation results | | | | | |
|---|---|---|---|---|---|---|
| | Curability | Skin irritation | Adhesion | Processing suitability | Discharge properties | Ink stability |
| Ex. 1 | Excellent | Excellent | Excellent | Excellent | Excellent | Excellent |
| Ex. 2 | Excellent | Good | Good | Excellent | Excellent | Good |
| Ex. 3 | Excellent | Good | Good | Excellent | Excellent | Good |
| Ex. 4 | Excellent | Good | Good | Excellent | Excellent | Good |
| Ex. 5 | Excellent | Good | Good | Excellent | Excellent | Good |
| Ex. 6 | Excellent | Good | Good | Excellent | Excellent | Good |
| Ex. 7 | Excellent | Excellent | Good | Excellent | Excellent | Excellent |
| Ex. 8 | Excellent | Excellent | Good | Excellent | Excellent | Excellent |
| Ex. 9 | Excellent | Excellent | Good | Excellent | Excellent | Good |
| Ex. 10 | Excellent | Excellent | Good | Excellent | Excellent | Good |
| Ex. 11 | Excellent | Excellent | Good | Excellent | Excellent | Excellent |
| Ex. 12 | Excellent | Good | Good | Excellent | Excellent | Good |
| Ex. 13 | Excellent | Good | Good | Excellent | Excellent | Good |
| Ex. 14 | Excellent | Good | Good | Excellent | Excellent | Good |
| Ex. 15 | Excellent | Good | Good | Excellent | Excellent | Good |
| Ex. 16 | Excellent | Good | Good | Excellent | Excellent | Good |
| Ex. 17 | Excellent | Excellent | Good | Excellent | Excellent | Excellent |
| Ex. 18 | Excellent | Excellent | Good | Excellent | Excellent | Excellent |
| Ex. 19 | Excellent | Excellent | Good | Excellent | Excellent | Good |
| Ex. 20 | Excellent | Excellent | Good | Excellent | Excellent | Good |
| Ex. 21 | Good | Excellent | Excellent | Excellent | Excellent | Excellent |
| Ex. 22 | Good | Good | Excellent | Excellent | Excellent | Good |
| Ex. 23 | Good | Good | Excellent | Excellent | Excellent | Good |
| Ex. 24 | Excellent | Good | Excellent | Excellent | Excellent | Good |
| Ex. 25 | Excellent | Good | Excellent | Excellent | Excellent | Good |
| Ex. 26 | Good | Good | Excellent | Excellent | Excellent | Good |
| Ex. 27 | Good | Excellent | Excellent | Excellent | Excellent | Excellent |
| Ex. 28 | Good | Excellent | Excellent | Excellent | Excellent | Excellent |
| Ex. 29 | Good | Excellent | Excellent | Excellent | Excellent | Good |
| Ex. 30 | Good | Excellent | Excellent | Excellent | Excellent | Good |

**(Table 3)**

| | Polymerizable monomer | | | | | | Additive | | (Component c)/wt % | | | | | (Component f) | | Mill base/wt % |
|---|---|---|---|---|---|---|---|---|---|---|---|---|---|---|---|---|
| | (Component a) | wt% | (Comp b) | wt% | (Component e) | wt% | Polymerization inhibitor | wt% | BPh | 184 | 819 | TPO | ITX | Type | wt% | |
| Ex 31 | SR256 | 39 3 | FA-511AS | 39 0 | SR351S | 1 | ST-1 | 0 1 | 0 0 | 3 0 | 1 0 | 5 5 | 1 0 | BYK-307 | 0 1 | Cyan 10 |
| Ex 32 | SR256 | 39 3 | SR506 | 39 0 | SR351 S | 1 | ST-1 | 0 1 | 0 0 | 3 0 | 1 0 | 5 5 | 1 0 | BYK-307 | 0 1 | Cyan 10 |
| Ex 33 | SR256 | 39 3 | NVC | 39 0 | SR351S | 1 | ST-1 | 0 1 | 0 0 | 3 0 | 1 0 | 5 5 | 1 0 | BYK-307 | 0 1 | Yellow 10 |
| Ex 34 | SR256 | 39 3 | FA-512AS | 39 0 | SR351S | 1 | ST-1 | 0 1 | 0 0 | 3 0 | 1 0 | 5 5 | 1 0 | BYK-307 | 0 1 | Yellow 10 |
| Ex 35 | SR256 | 39 3 | FA-511AS | 39 0 | SR508 | 1 | ST-1 | 0 1 | 0 0 | 3 0 | 1 0 | 5 5 | 1 0 | BYK-307 | 0 1 | Magenta 10 |
| Ex 36 | SR256 | 39 3 | FA-511AS | 39 0 | SR212 | 1 | ST-1 | 0 1 | 0 0 | 3 0 | 1 0 | 5 5 | 1 0 | BYK-307 | 0 1 | Magenta 10 |
| Ex 37 | SR256 | 39 3 | FA-511AS | 39 0 | SR213 | 1 | ST-1 | 0 1 | 0 0 | 3 0 | 1 0 | 5 5 | 1 0 | BYK-307 | 0 1 | White 10 |
| Ex 38 | SR256 | 38 3 | FA-511AS | 38 0 | SR351S | 3 | ST-1 | 0 1 | 0 0 | 3 0 | 1 0 | 5 5 | 1 0 | BYK-307 | 0 1 | White 10 |
| Ex 39 | SR285 | 38 3 | FA-511AS | 38 0 | SR351S | 3 | ST-1 | 0 1 | 0 0 | 3 0 | 1 0 | 5 5 | 1 0 | BYK-307 | 0 1 | White 10 |
| Ex 40 | OXE-10 | 38 3 | FA-511AS | 38 0 | SR351S | 3 | ST-1 | 0 1 | 0 0 | 3 0 | 1 0 | 5 5 | 1 0 | BYK-307 | 0 1 | Magenta 10 |
| Ex 41 | MEDOL10 | 38 3 | FA-511AS | 38 0 | SR351S | 3 | ST-1 | 0 1 | 0 0 | 3 0 | 1 0 | 5 5 | 1 0 | BYK-307 | 0 1 | Magenta 10 |
| Ex 42 | CHDOL10 | 38 3 | FA-511AS | 38 0 | SR351S | 3 | ST-1 | 0 1 | 0 0 | 3 0 | 1 0 | 5 5 | 1 0 | BYK-307 | 0 1 | Magenta 10 |
| Ex 43 | SR339 | 38 3 | FA-511AS | 38 0 | SR351S | 3 | ST-1 | 0 1 | 0 0 | 3 0 | 1 0 | 5 5 | 1 0 | BYK-307 | 0 1 | Magenta 10 |
| Ex 44 | 2-MTA | 38 3 | FA-511AS | 38 0 | SR351S | 3 | ST-1 | 0 1 | 0 0 | 3 0 | 1 0 | 5 5 | 1 0 | BYK-307 | 0 1 | Magenta 10 |
| Ex 45 | Viscoat #158 | 38 3 | FA-511AS | 38 0 | SR351S | 3 | ST-1 | 0 1 | 0 0 | 3 0 | 1 0 | 5 5 | 1 0 | BYK-307 | 0 1 | Magenta 10 |
| Ex 46 | Light-Acrylate BO-A | 38 3 | FA-511AS | 38 0 | SR351S | 3 | ST-1 | 0 1 | 0 0 | 3 0 | 1 0 | 5 5 | 1 0 | BYK-307 | 0 1 | Magenta 10 |
| Ex 47 | New Frontier CEA | 38 3 | FA-511AS | 38 0 | SR351S | 3 | ST-1 | 0 1 | 0 0 | 3 0 | 1 0 | 5 5 | 1 0 | BYK-307 | 0 1 | Magenta 10 |
| Ex 48 | SR256 | 37 3 | FA-511AS | 37 0 | SR351S | 5 | ST-1 | 0 1 | 0 0 | 3 0 | 1 0 | 5 5 | 1 0 | BYK-307 | 0 1 | Magenta 10 |
| Ex 49 | SR285 | 37 3 | FA-511AS | 37 0 | SR351S | 5 | ST-1 | 0 1 | 0 0 | 3 0 | 1 0 | 5 5 | 1 0 | BYK-307 | 0 1 | Magenta 10 |
| Ex 50 | OXE-10 | 37 3 | FA-511AS | 37 0 | SR351S | 5 | ST-1 | 0 1 | 0 0 | 3 0 | 1 0 | 5 5 | 1 0 | BYK-307 | 0 1 | Magenta 10 |
| Ex 51 | MEDOL10 | 37 3 | FA-511AS | 37 0 | SR351S | 5 | ST-1 | 0 1 | 0 0 | 3 0 | 1 0 | 5 5 | 1 0 | BYK-307 | 0 1 | Magenta 10 |
| Ex 52 | CHDOL10 | 37 3 | FA-511AS | 37 0 | SR351S | 5 | ST-1 | 0 1 | 0 0 | 3 0 | 1 0 | 5 5 | 1 0 | BYK-307 | 0 1 | Magenta 10 |
| Ex 53 | SR339 | 37 3 | FA-511AS | 37 0 | SR351S | 5 | ST-1 | 0 1 | 0 0 | 3 0 | 1 0 | 5 5 | 1 0 | BYK-307 | 0 1 | Magenta 10 |
| Ex 54 | 2-MTA | 37 3 | FA-511AS | 37 0 | SR351S | 5 | ST-1 | 0 1 | 0 0 | 3 0 | 1 0 | 5 5 | 1 0 | BYK-307 | 0 1 | Magenta 10 |
| Ex 55 | Viscoat #158 | 37 3 | FA-511AS | 37 0 | SR351S | 5 | ST-1 | 0 1 | 0 0 | 3 0 | 1 0 | 5 5 | 1 0 | BYK-307 | 0 1 | Magenta 10 |
| Ex 56 | Light-Acrylate BO-A | 37 3 | FA-511S | 37 0 | SR351S | 5 | ST-1 | 0 1 | 0 0 | 3 0 | 1 0 | 5 5 | 1 0 | BYK-307 | 0 1 | Magenta 10 |
| Ex 57 | New Frontier CEA | 37 3 | FA-511AS | 37 0 | SR351S | 5 | ST-1 | 0 1 | 0 0 | 3 0 | 1 0 | 5 5 | 1 0 | BYK-307 | 0 1 | Magenta 10 |
| Ex 58 | SR256 | 37 3 | FA-511AS | 37 0 | SR212 | 5 | ST-1 | 0 1 | 0 0 | 2 0 0 | 1 0 0 | 5 5 | 1 0 | BYK-307 | 0 1 | Magenta 10 |
| Ex 59 | SR256 | 37 3 | FA-511AS | 37 0 | SR212 | 5 | 4-MP | 0 3 | 1 0 | 2 0 | 1 0 | 5 3 | 1 0 | BYK-307 | 0 1 | Magenta 10 |
| Ex 60 | SR256 | 37 3 | FA-511AS | 37 0 | SR213 | 5 | ST-1 | 0 1 | 1 0 | 2 0 | 1 0 | 5 5 | 1 0 | BYK-307 | 0 1 | Magenta 10 |

**(Table 4)**

| | Evaluation results | | | | | |
|---|---|---|---|---|---|---|
| | Curability | Skin irritation | Adhesion | Processing suitability | Discharge properties | Ink stability |
| Ex. 31 | Good | Excellent | Excellent | Excellent | Excellent | Excellent |
| Ex. 32 | Good | Excellent | Excellent | Excellent | Excellent | Excellent |
| Ex. 33 | Good | Excellent | Excellent | Excellent | Excellent | Excellent |
| Ex. 34 | Good | Excellent | Excellent | Excellent | Excellent | Excellent |
| Ex. 35 | Excellent | Good | Good | Excellent | Excellent | Good |
| Ex. 36 | Excellent | Good | Good | Excellent | Excellent | Good |
| Ex. 37 | Excellent | Excellent | Good | Excellent | Excellent | Excellent |
| Ex. 38 | Excellent | Excellent | Good | Excellent | Excellent | Excellent |
| Ex. 39 | Excellent | Excellent | Good | Good | Excellent | Good |
| Ex. 40 | Excellent | Excellent | Good | Good | Excellent | Good |
| Ex. 41 | Excellent | Excellent | Good | Good | Excellent | Excellent |
| Ex. 42 | Excellent | Good | Good | Good | Excellent | Good |
| Ex. 43 | Excellent | Good | Good | Good | Excellent | Good |
| Ex. 44 | Excellent | Good | Good | Good | Excellent | Good |
| Ex. 45 | Excellent | Good | Good | Good | Excellent | Good |
| Ex. 46 | Excellent | Good | Good | Good | Excellent | Good |
| Ex. 47 | Excellent | Excellent | Good | Good | Excellent | Excellent |
| Ex. 48 | Excellent | Excellent | Good | Good | Excellent | Excellent |
| Ex. 49 | Excellent | Excellent | Good | Good | Excellent | Good |
| Ex. 50 | Excellent | Excellent | Good | Good | Excellent | Good |
| Ex. 51 | Good | Excellent | Excellent | Good | Excellent | Excellent |
| Ex. 52 | Good | Good | Excellent | Good | Excellent | Good |
| Ex. 53 | Good | Good | Excellent | Good | Excellent | Good |
| Ex. 54 | Excellent | Good | Excellent | Good | Excellent | Good |
| Ex. 55 | Excellent | Good | Excellent | Good | Excellent | Good |
| Ex. 56 | Good | Good | Excellent | Good | Excellent | Good |
| Ex. 57 | Good | Excellent | Excellent | Good | Excellent | Excellent |
| Ex. 58 | Good | Excellent | Excellent | Good | Excellent | Excellent |
| Ex. 59 | Good | Excellent | Excellent | Good | Excellent | Good |
| Ex. 60 | Good | Excellent | Excellent | Good | Excellent | Good |

**(Table 5)**

| | Polymerizable monomer | | | | | | Polymerization inhibitor | (Component c)/wt % | | | | (Component f) | | Mill base/wt % |
|---|---|---|---|---|---|---|---|---|---|---|---|---|---|---|
| | (Component a) | wt % | (Component b) | wt % | (Component e) | wt % | Firstcure ST-1 | 184 | 819 | TPO | ITX | Type | wt % | |
| Ex 61 | SR256 | 38 7 | FA-511AS | 38 7 | SR351S | 1 | 0 1 | 3 0 | 1 0 | 5 5 | 1 0 | A-1 | 1 0 | Cyan 10 |
| Ex 62 | SR285 | 38 7 | FA-511AS | 38 7 | SR351S | 1 | 0 1 | 3 0 | 1 0 | 5 5 | 1 0 | A-2 | 1 0 | Cyan 10 |
| Ex 63 | OXE-10 | 38 7 | FA-511AS | 38 7 | SR351S | 1 | 0 1 | 3 0 | 1 | 5 5 | 1 0 | A-4 | 1 0 | Yellow 10 |
| Ex 64 | SR256 | 38 7 | FA-511AS | 38 7 | SR351S | 1 | 0 1 | 3 0 | 1 0 | 5 5 | 1 0 | A-1 | 3 0 | Yellow 10 |
| Ex 65 | SR285 | 38 7 | FA-511AS | 38 7 | SR508 | 1 | 0 1 | 3 0 | 1 | 5 5 | 1 0 | A-2 | 3 | Magenta 10 |
| Ex 66 | OXE-10 | 38 7 | FA-511AS | 38 7 | SR212 | 1 | 0 1 | 3 0 | 1 | 5 5 | 1 0 | A-4 | 3 | Magenta 10 |
| Ex 67 | 2-MTA | 39 3 | FA-511AS | 39 0 | SR213 | 1 | 0 1 | 3 0 | 1 | 5 5 | 1 0 | BYK-307 | 0 1 | White 10 |
| Ex 68 | #158 | 39 3 | FA-511AS | 39 0 | SR351S | 1 | 0 1 | 3 0 | 1 | 5 5 | 1 0 | BYK-307 | 0 1 | White 10 |
| Ex 69 | BO-A | 39 3 | FA-511AS | 39 0 | SR351S | 1 | 0 1 | 3 0 | 1 | 5 5 | 1 0 | BYK-307 | 0 1 | White 10 |
| Ex 70 | CEA | 39 3 | FA-511AS | 39 0 | SR351S | 1 | 0 1 | 3 0 | 1 0 | 5 5 | 1 0 | BYK-307 | 0 1 | Magenta 10 |
| Ex 71 | SR256 | 30 0 | FA-511AS | 48 6 | SR351S | 1 | 0 1 | 3 0 | 1 0 | 5 5 | 1 0 | BYK-307 | 0 1 | Magenta 10 |
| Ex 72 | SR285 | 30 0 | FA-511AS | 48 6 | SR351S | 1 | 0 1 | 3 0 | 1 0 | 5 5 | 1 0 | BYK-307 | 0 1 | Magenta 10 |
| Ex 73 | OXE-10 | 30 0 | FA-511AS | 48 6 | SR351S | 1 | 0 1 | 3 0 | 1 0 | 5 5 | 1 0 | BYK-307 | 0 1 | Magenta 10 |
| Ex 74 | MEDOL10 | 30 0 | FA-511AS | 48 6 | SR351S | 1 | 0 1 | 3 0 | 1 0 | 5 5 | 1 0 | BYK-307 | 0 1 | Magenta 10 |
| Ex 75 | CHDOL-10 | 30 0 | FA-511AS | 48 6 | SR351S | 1 | 0 1 | 3 0 | 1 0 | 5 5 | 1 0 | BYK-307 | 0 1 | Magenta 10 |
| Ex 76 | SR339 | 30 0 | FA-511AS | 48 6 | SR351S | 1 | 0 1 | 3 0 | 1 0 | 5 5 | 1 0 | BYK-307 | 0 1 | Magenta 10 |
| Ex 77 | 2-MTA | 30 0 | FA-511AS | 48 6 | SR351S | 1 | 01 | 3 0 | 1 0 | 5 5 | 1 0 | BYK-307 | 0 1 | Magenta 10 |
| Ex 78 | #158 | 30 0 | FA-511AS | 48 6 | SR351S | 1 | 0 1 | 3 0 | 1 0 | 5 5 | 1 0 | BYK-307 | 0 | Magenta 10 |
| Ex 79 | BO-A | 30 0 | FA-511AS | 48 6 | SR351S | 1 | 0 1 | 3 0 | 1 0 | 5 5 | 1 0 | BYK-307 | 0 1 | Magenta 10 |
| Ex 80 | CEA | 30 0 | FA-511AS | 48 6 | SR351S | 1 | 0 1 | 3 0 | 1 0 | 5 5 | 1 0 | BYK-307 | 0 1 | Magenta 10 |
| Ex 81 | SR256 | 48 6 | FA-511AS | 30 0 | SR351S | 1 | 0 1 | 3 0 | 1 0 | 5 5 | 1 0 | BYK-307 | 0 1 | Magenta 10 |
| Ex 82 | SR285 | 48 6 | FA-511AS | 30 0 | SR351S | 1 | 0 1 | 3 0 | 1 0 | 5 5 | 1 0 | BYK-307 | 0 1 | Magenta 10 |
| Ex 83 | OXE-10 | 48 6 | FA-511AS | 30 0 | SR351S | 1 | 0 1 | 3 0 | 1 0 | 5 5 | 1 0 | BYK-307 | 0 1 | Magenta 10 |
| Ex 84 | MEDOL10 | 48 6 | FA-511AS | 30 0 | SR351S | 1 | 0 1 | 3 0 | 1 0 | 5 5 | 1 0 | BYK-307 | 0 1 | Magenta 10 |
| Ex 85 | CHDOL-10 | 48 6 | FA-511AS | 30 0 | SR351S | 1 | 0 1 | 3 0 | 1 | 5 5 | 1 0 | BYK-307 | 0 1 | Magenta 10 |
| Ex 86 | SR339 | 48 6 | FA-511AS | 30 0 | SR351S | 1 | 0 1 | 3 0 | 1 | 5 5 | 1 0 | BYK-307 | 0 1 | Magenta 10 |
| Ex 87 | 2-MTA | 48 6 | FA-511AS | 30 0 | SR351S | 1 | 0 1 | 3 0 | 1 | 55 | 1 0 | BYK-307 | 0 1 | Magenta 10 |
| Ex 88 | #158 | 48 6 | FA-511AS | 30 0 | SR212 | 1 | 0 1 | 3 0 | 1 | 5 5 | 1 0 | BYK-307 | 0 | Magenta 10 |
| Ex 89 | BO-A | 48 6 | FA-511AS | 30 0 | SR212 | 1 | 0 1 | 3 0 | 1 | 5 5 | 1 0 | BYK-307 | 0 1 | Magenta 10 |
| Ex 90 | CEA | 48 6 | FA-511AS | 30 0 | SR213 | 1 | 0 1 | 3 0 | 1 0 | 5 5 | 1 0 | BYK-307 | 0 1 | Magenta 10 |
| Comp Ex 1 | SR256 | 20 | FA-511AS | 58 3 | - | - | 0 1 | 3 | 1 | 5 5 | 1 | BYK-307 | 0 1 | Cyan 10 |
| Comp Ex 2 | SR256 | 58 3 | FA-511AS | 20 | - | - | 0 1 | 3 | 1 | 5 5 | 1 | BYK-307 | 0 1 | Cyan 10 |
| Comp Ex 3 | SR256 | 34 3 | FA-511AS | 34 | - | - | 0 1 | 3 | 1 | 5 5 | 1 | BYK-307 | 0 1 | Yellow 10 |
| Comp Ex 4 | SR256 | 34 3 | FA-511AS FA-513 AS | 17 17 | - | - | 0 1 | 3 | 1 | 5 5 | 1 | BYK-307 | 0 1 | Yellow 1 |
| Comp Ex 5 | SR256 | 39 4 | FA-511AS | 39 | - | - | 0 1 | 3 | 1 | 5 5 | 1 | - | - | Magenta 10 |

**(Table 6)**

| | Evaluation results | | | | | |
|---|---|---|---|---|---|---|
| | Curability | Skin irritation | Adhesion | Processing suitability | Discharge properties | Ink stability |
| Ex. 61 | Excellent | Excellent | Excellent | Good | Good | Excellent |
| Ex. 62 | Excellent | Good | Good | Good | Good | Good |
| Ex. 63 | Excellent | Good | Good | Good | Good | Good |
| Ex. 64 | Excellent | Excellent | Excellent | Good | Good | Excellent |
| Ex. 65 | Excellent | Good | Good | Good | Good | Good |
| Ex. 66 | Excellent | Good | Good | Good | Good | Good |
| Ex. 67 | Excellent | Excellent | Good | Excellent | Good | Excellent |
| Ex. 68 | Excellent | Excellent | Good | Excellent | Good | Excellent |
| Ex. 69 | Excellent | Excellent | Good | Excellent | Good | Good |
| Ex. 70 | Excellent | Excellent | Good | Excellent | Good | Good |
| Ex. 71 | Excellent | Excellent | Good | Excellent | Good | Excellent |
| Ex. 72 | Excellent | Good | Good | Excellent | Good | Good |
| Ex. 73 | Excellent | Good | Good | Excellent | Good | Good |
| Ex. 74 | Excellent | Good | Good | Excellent | Good | Good |
| Ex. 75 | Excellent | Good | Good | Excellent | Good | Good |
| Ex. 76 | Excellent | Good | Good | Excellent | Good | Good |
| Ex. 77 | Excellent | Excellent | Good | Excellent | Good | Excellent |
| Ex. 78 | Excellent | Excellent | Good | Excellent | Good | Excellent |
| Ex. 79 | Excellent | Excellent | Good | Excellent | Good | Good |
| Ex. 80 | Excellent | Excellent | Good | Excellent | Good | Good |
| Ex. 81 | Good | Excellent | Excellent | Excellent | Good | Excellent |
| Ex. 82 | Good | Good | Excellent | Excellent | Good | Good |
| Ex. 83 | Good | Good | Excellent | Excellent | Good | Good |
| Ex. 84 | Excellent | Good | Excellent | Excellent | Good | Good |
| Ex. 85 | Excellent | Good | Excellent | Excellent | Good | Good |
| Ex. 86 | Good | Good | Excellent | Excellent | Good | Good |
| Ex. 87 | Good | Excellent | Excellent | Excellent | Good | Excellent |
| Ex. 88 | Good | Excellent | Excellent | Excellent | Good | Excellent |
| Ex. 89 | Good | Excellent | Excellent | Excellent | Good | Good |
| Ex. 90 | Good | Excellent | Excellent | Excellent | Good | Good |
| Comp. Ex. 1 | Good | Excellent | Poor | Excellent | Good | Excellent |
| Comp. Ex. 2 | Poor | Excellent | Excellent | Excellent | Good | Excellent |
| Comp. Ex. 3 | Good | Excellent | Excellent | Poor | Good | Excellent |
| Comp. Ex. 4 | Good | Excellent | Excellent | Poor | Good | Excellent |
| Comp. Ex. 5 | Excellent | Good | Good | Poor | Poor | Good |

## Claims

1. An ink composition comprising:
(Component a) an open-chain and/or cyclic ether bond-containing monofunctional (meth)acrylate;
(Component b) one or more monofunctional ethylenically unsaturated compounds selected from the group consisting of a polycyclic aliphatic group-containing monofunctional (meth)acrylate and N-vinyl-2-caprolactam,
(Component c) a polymerization initiator;
(Component e) a polyfunctional (meth)acrylate at no greater than 10 wt % relative to the ink composition; and
(Component f) a fluorine-substituted hydrocarbon group- or siloxane structure-containing polymer,
the ratio by weight of (Component a)/(Component b) being 0.7 to 1.9.

2. The ink composition according to Claim 1, wherein Component a above is selected from the group consisting of ethoxyethoxyethyl acrylate, tetrahydrofurfuryl acrylate, 2-methoxyethyl acrylate, 3-methoxybutyl acrylate, butoxyethyl acrylate, and an ethylene oxide-modified cresol acrylate.

3. The ink composition according to Claims 1 or 2, wherein Component b above is one or more monofunctional ethylenically unsaturated compounds selected from the group consisting of dicyclopentenyloxyethyl (meth)acrylate, dicyclopentenyl (meth)acrylate, dicyclopentanyl (meth)acrylate, isobornyl (meth)acrylate, and N-vinyl-2-caprolactam.

4. The ink composition according to any one of Claims 1 to 3, wherein it further comprises (Component d) a colorant.

5. The ink composition according to any one of Claims 1 to 4, wherein Component f above comprises an ethylenically unsaturated group.

6. The ink composition according to Claim 5, wherein the ethylenically unsaturated group of Component f above is a (meth)acryloyloxy group and/or a (meth)acrylamide group.

7. The ink composition according to any one of Claims 1 to 6, wherein the ratio by weight of (Component a)/(Component b) is 0.73 to 1.81.

8. The ink composition according to any one of Claims 1 to 7, wherein Component a is contained at 15 to 55 wt % relative to the ink composition, and Component b is contained at 15 to 50 wt % relative to the ink composition.

9. The ink composition according to any one of Claims 1 to 8, wherein Component e is contained at 0.1 to 6 wt % relative to the ink composition.

10. The ink composition according to any one of Claims 1 to 9, wherein Component e is contained at 1 to 5 wt % relative to the ink composition.

11. The ink composition according to any one of Claims 1 to 10, wherein Component f is contained at 0.1 to 3 wt % relative to the ink composition.

12. The ink composition according to any one of Claims 1 to 11, wherein Component a is 2-(2-ethoxyethoxy)ethyl acrylate, Component b is dicyclopentenyl acrylate, Component e is trimethylolpropane triacrylate, and Component f is a polyether-modified polydimethylsiloxane.

13. The ink composition according to any one of Claims 1 to 12, wherein Component a is 2-(2-ethoxyethoxy)ethyl acrylate, Component b is dicyclopentenyl acrylate, Component e is trimethylolpropane triacrylate, and Component f is a polyurethane containing a constitutional unit derived from a diol that contains a fluoroalkyl group or a siloxane structure and contains a (meth)acrylate residue.

14. An inkjet recording method comprising:
(a¹) an image formation step of forming an image above a recording medium by discharging the ink composition according to any one of Claims 1 to 13 by an inkjet method; and
(b¹) a curing step of curing the ink composition by irradiating the obtained image with actinic radiation to thus obtain a cured image above the recording medium.

15. A process for producing a molded printed material comprising:
(a²) an image formation step of forming an image above a recording medium by discharging the ink composition according to Claim 1 by an inkjet method;
(b²) a curing step of curing the ink composition by irradiating the obtained image with actinic radiation to thus obtain a printed material having a cured image above the recording medium; and
(c²) a molding step of molding the printed material.
